(19) Europäisches Patentamt / European Patent Office / Office européen des brevets

(11) **EP 2 586 226 B1**

(12) **EUROPEAN PATENT SPECIFICATION**

(45) Date of publication and mention
of the grant of the patent:
**16.03.2016 Bulletin 2016/11**

(21) Application number: **10853772.1**

(22) Date of filing: **20.10.2010**

(51) Int Cl.:
**H04W 48/18** (2009.01)

(86) International application number:
**PCT/SE2010/051134**

(87) International publication number:
**WO 2011/162661 (29.12.2011 Gazette 2011/52)**

(54) **METHODS AND NODES IN A WIRELESS COMMUNICATION NETWORK**

VERFAHREN UND KNOTEN IN EINEM FUNKKOMMUNIKATIONSNETZ

PROCÉDÉS ET NOEUDS DANS UN RÉSEAU DE COMMUNICATION SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.06.2010 US 358211 P**

(43) Date of publication of application:
**01.05.2013 Bulletin 2013/18**

(73) Proprietor: **Telefonaktiebolaget LM Ericsson
(publ)
164 83 Stockholm (SE)**

(72) Inventors:
• **DAHLMAN, Erik
SE-168 68 Bromma (SE)**
• **JOHANSSON, Niklas
S-191 34 Sollentuna (SE)**
• **PARKVALL, Stefan
S-113 25 Stockholm (SE)**

(74) Representative: **Ericsson
Patent Development
Torshamnsgatan 21-23
164 80 Stockholm (SE)**

(56) References cited:
EP-A1- 1 406 418     EP-A1- 2 071 738
US-A1- 2006 052 105  US-A1- 2007 097 939
US-A1- 2007 243 878  US-A1- 2009 264 124
US-A1- 2009 268 684  US-A1- 2009 298 515
US-A1- 2010 027 510  US-A1- 2010 027 510
US-A1- 2010 054 237  US-A1- 2010 113 039

• LG ELECTRONICS: "Considerations on interference coordination in heterogeneous networks", 3GPP DRAFT; R1-100236 INTERFERENCE COORDINATION IN HETNET V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Valencia, Spain; 20100118, 12 January 2010 (2010-01-12), XP050417923, [retrieved on 2010-01-12]
• INTEL CORPORATION (UK) LTD: "Non-CA based PDCCH Interference Mitigation in LTE-A", 3GPP DRAFT; R1-102814_EICIC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Montreal, Canada; 20100510, 6 May 2010 (2010-05-06), XP050420360, [retrieved on 2010-05-06]

**Description**

TECHNICAL FIELD

The present disclosure relates to a first network node, a method in a first network node, a user equipment and a method in a user equipment. In particular, it relates to a mechanism for configuring a second network node to operate either in cell mode or in beam mode, when communicating with at least one user equipment.

BACKGROUND

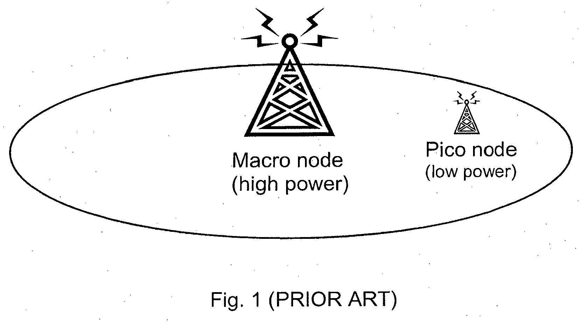

The use of a so called heterogeneous deployment or heterogeneous network as it also may be referred to, comprising network transmission nodes operating with different transmit powers and with overlapping coverage areas, is considered to be an interesting future deployment strategy for cellular networks, see **Figure 1.**

Figure 1 illustrates a heterogeneous deployment, with a higher-power node, or "macro node", and a lower-power node, or "pico node". In a typical case, there may be multiple pico nodes within the coverage area of a macro node.

There are a number of different nodes that may be part of heterogeneous networks, such as e.g. macro base stations, micro base stations, pico base stations, femto base stations, relays and repeaters, just to mention some examples.

A macro node, or macro base station, may be a conventional base station that use dedicated backhaul and is open to public access. Typical transmit power may be e.g. -43 dBm; antenna gain -12-15 dBi.

A pico node, or pico base station, may be a low power base station that uses dedicated backhaul connections and is open to public access. Typical transmit power may range from ~ 23 dBm-30 dBm, 0-5 dBi antenna gain.

A femto base station may be a consumer-deployable base station that utilizes a consumer's broadband connection as backhaul; femto base stations may have restricted associations e.g. closed subscriber groups. Typical transmit power of a femto base station may be less than 23 dBm.

In such a deployment, the low-power nodes, pico nodes, are typically assumed to offer high data rates (Mbps), as well as provide high capacity (users/sqm or Mbps/sqm), in the local areas where this is needed/desired, while the high-power nodes, macro nodes, are assumed to provide full-area coverage within the cell. In practice, the macro nodes may correspond to currently deployed macro cells while the pico nodes are later deployed nodes, extending the capacity and/or achievable data rates within the macro-cell coverage area where needed.

In a heterogeneous deployment with macro nodes and pico nodes, the pico nodes may create cells of their own, pico cells, different from the overlaid macro cell. In such a case, different strategies may be used for selecting what cell (the macro cell or the pico cell) to select for communication.

The user equipment may connect to the cell, i.e. either the macro cell or the pico cell, to which the path loss is the smallest, i.e. cell selection is based on path loss. At least from the point of view of uplink data rate, connecting to the cell having the lowest path loss is preferred, because, for a given available user equipment transmit power, a smaller path loss leads to higher received power and thus to the possibility for higher data rates. However, because common signals/channels as well as L1/L2 control channels are transmitted with higher power from the macro cell, compared to the pico cell, the user equipment connected to the pico cell may experience very high interference from the macro-cell transmission of these signals/channels. There are approaches to at least partly mitigating this interference, but they require special user equipment functionality that is not necessarily implemented in all user equipments.

Alternatively, the user equipment may connect to the cell, i.e. either the macro cell or the pico cell, from which the common downlink channels/signals. In the 3rd Generation Partnership Project Long Term Evolution (3GPP LTE) case, the cell-specific reference signals, are received with the highest power, i.e. cell-selection is based on received downlink power. This is equivalent to saying that the user equipment connects to the cell with the lowest path loss, weighted by the transmit power of the signals measured on. However, due to the higher transmit power of the macro cell, a user equipment may then connect to the overlaid macro cell even if the path loss to a pico cell is smaller, leading to at least lower uplink data rates. It may also lead to a reduced downlink efficiency due to the fact that, although the downlink signals are received with higher power from the macro cell, this is achieved at the expense of causing more downlink interference to other user equipments.

In a heterogeneous deployment with pico nodes not corresponding to cells of their own, the above problem of excessive common/control-channel interference to pico user equipments from the macro-cell transmission is not present. In such cases, the common channels and L1/L2 control channels are always transmitted from the macro node, even though out Physical Downlink Shared Channel (PDSCH) is transmitted from the pico node. However, as all L1/L2 control channels, corresponding to all downlink and uplink data transmissions, are transmitted from the macro cell, and there are a limited amount of resources available for these channels, there may not be sufficient control channels to handle all users within the macro cell, including those within the coverage area of the pico node. Thus, the overall capacity, measured in number of user equipments that can be simultaneously supported, may be limited. Therefore, although a heterogeneous deployment with pico nodes not corresponding to cells of their own may provide excellent performance in terms of the data rates that may be supported, the capacity in terms of the number of user equipments that can simultaneously be scheduled over the macro-cell coverage area may be limited.

SUMMARY

It is an object to obviate at least some of the above mentioned disadvantages and to improve the performance within a wireless communication network.

According to a first aspect, the object is achieved by a method in a first network node. The method aims at configuring a second network node to operate either in cell mode or in beam mode when communicating with at least one user equipment. The control signalling and data transmissions are transmitted between the second network node and the at least one user equipment, when the second network node is configured in cell mode. In beam mode however, at least some control signalling is transmitted between the first network node and the at least one user equipment, while data transmissions are transmitted between the second network node and the at least one user equipment. The method comprises obtaining information for determining the operative mode of the second network node. Also, the method comprises comparing the obtained information with a threshold value. In addition, the method further comprises determining the operative mode of the second network node, based on the made comparison. Furthermore, additionally, the method comprises configuring the second network node in cell mode or in beam mode when communicating with the at least one user equipment, according to the determined operative mode of the second network node.

According to a second aspect, the object is also achieved by a first network node. The first network node is adapted to configure a second network node to operate either in cell mode or in beam mode when communicating with at least one user equipment. The control signalling and data transmissions are transmitted between the second network node and the at least one user equipment, when the second network node is configured in cell mode. In beam mode however, at least some control signalling is transmitted between a first network node and the at least one user equipment, while data transmissions are transmitted between the second network node and the at least one user equipment. The first network node comprises a processing circuit, configured to obtain information for deciding the operative mode of the second network node. Further, the processing circuit is configured to compare the obtained information with a threshold value, to determine operative mode of the second network node, based on the made comparison, and to configure the second network node in cell mode or in beam mode, when communicating with the at least one user equipment, according to the determined operative mode of the second network node.

According to a third aspect, the object is achieved by a method in a user equipment. The method aims at configuring a second network node to operate either in cell mode or in beam mode when communicating with at least one user equipment. The control signalling and data transmissions are transmitted between the second network node and the at least one user equipment, when the second network node is configured in cell mode. In beam mode however, at least some control signalling is transmitted between the first network node and the at least one user equipment, while data transmissions are transmitted between the second network node and the at least one user equipment. The method comprises obtaining information for determining the operative mode of the second network node. Also, the method comprises comparing the obtained information with a threshold value. In addition, the method further comprises determining the operative mode of the second network node, based on the made comparison. Furthermore, additionally, the method comprises configuring the second network node in cell mode or in beam mode when communicating with the at least one user equipment, according to the determined operative mode of the second network node.

According to a fourth aspect, the object is also achieved by a user equipment. The user equipment is adapted to configure a second network node to operate either in cell mode or in beam mode when communicating with at least one user equipment. The control signalling and data transmissions are transmitted between the second network node and the at least one user equipment, when the second network node is configured in cell mode. In beam mode however, at least some control signalling is transmitted between a first network node and the at least one user equipment, while data transmissions are transmitted between the second network node and the at least one user equipment. The user equipment comprises a processing circuit, configured to obtain information for deciding the operative mode of the second network node. Further, the processing circuit is configured to compare the obtained information with a threshold value, to determine operative mode of the second network node, based on the made comparison, and to configure the second network node in cell mode or in beam mode, when communicating with the at least one user equipment, according to the determined operative mode of the second network node.

Regardless of the particular approach used to realize the algorithms and processing functions disclosed in detail herein, for implementing the contemplated methods and/or nodes, embodiments of the present methods and nodes allow for a dynamic trade-off between the benefits of operating pico sites as cells of their own or as beam extensions of the overlaid macro cell. The dynamic configuration decision provides for improved system performance and service provisioning in different scenarios, and the performance of the wireless communication network is thereby improved.

Other features and advantages will become apparent from the following detailed description.

BRIEF DESCRIPTION OF THE DRAWINGS

Embodiments of the methods, network nodes and user equipments are described in more detail with reference to attached drawings illustrating exemplary embodiments and in which:

Figure 1      is a schematic block diagram illustrating a wireless communication network according to prior art.

Figure 2      is a schematic block diagram illustrating a wireless communication network according to some embodiments.

Figure 3A     is a schematic block diagram illustrating a wireless communication network according to some embodiments.

Figure 3B     is a schematic block diagram illustrating a wireless communication network according to some embodiments.

Figure 4      is a schematic block diagram illustrating beamforming within a wireless communication network according some embodiments.

Figure 5      is a schematic block diagram illustrating nodes operating within a wireless communication network according some embodiments.

Figure 6A     is a combined block diagram and flow chart illustrating an exemplary embodiment within a wireless communication network.

Figure 6B     is a combined block diagram and flow chart illustrating an exemplary embodiment within a wireless communication network.

Figure 6C     is a combined block diagram and flow chart illustrating an exemplary embodiment within a wireless communication network.

Figure 7      is a schematic diagram illustrating a method in a first network node in a wireless communication network according to some embodiments of the present method.

Figure 8      is a schematic diagram illustrating a first network node in a wireless communication network according to some embodiments.

Figure 9      is a schematic diagram illustrating a method in a user equipment in a wireless communication network according to some embodiments of the present method.

Figure 10     is a schematic diagram illustrating a user equipment in a wireless communication network according to some embodiments.

DETAILED DESCRIPTION

The present solution is defined as a first network node, a method in a first network node, a user equipment and a method in a user equipment in a wireless communication network, which may be put into practice in the embodiments described below. This solution may, however, be embodied in many different forms and is not to be considered as limited to the embodiments set forth herein; rather, these embodiments are provided so that this disclosure will be thorough and complete.

Still other features and advantages of the present solution may become apparent from the following detailed description considered in conjunction with the accompanying drawings. It is to be understood, however, that the drawings are designed solely for purposes of illustration and not as a definition of the limits of the present solution. It is further to be understood that the drawings are not necessarily drawn to scale and that, unless otherwise indicated, they are merely intended to conceptually illustrate the structures and procedures described herein.

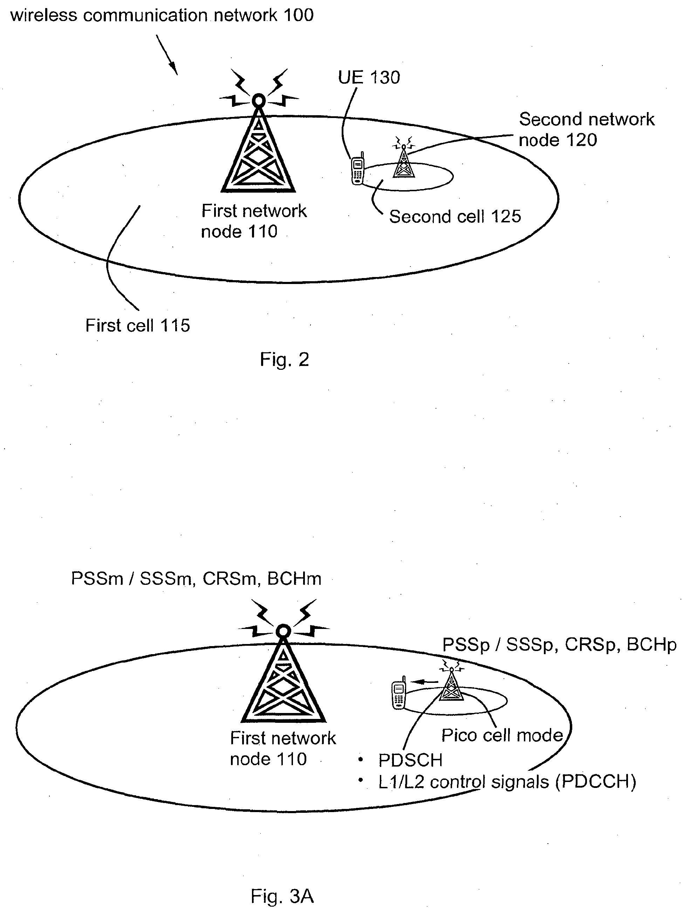

**Figure 2** depicts a wireless communication network 100, such as e.g. 3rd Generation Partnership Project (3GPP) Long Term Evolution (LTE), LTE-Advanced, Evolved Universal Terrestrial Radio Access Network (E-UTRAN), Universal Mobile Telecommunications System (UMTS), Global System for Mobile communications/ Enhanced Data rate for GSM Evolution (GSM/EDGE), Wideband Code Division Multiple Access (WCDMA), Worldwide Interoperability for Microwave Access (WiMax), or Ultra Mobile Broadband (UMB), just to mention some few options. The wireless communication network 100 may according to some embodiments comprise a heterogeneous wireless communication network. The term "heterogeneous" is in the present context indicating that the wireless communication network 100 comprises network transmission nodes with different transmit power operating with overlapping coverage areas.

In the following, the present methods and network nodes are further elaborated with specific reference to LTE networks in Frequency Division Duplex (FDD) mode. Thus the heterogeneous wireless network 100 is described as an LTE system throughout the rest of the description, for enhanced comprehension and readability. However, the corresponding concepts may also be applied in other wireless communication networks 100, based on other technologies, such as any of the ones enumerated above.

The wireless communication network 100 comprises a first network node 110, a second network node 120 and a user equipment 130, configured to communicate with each other. The user equipment 130 is configured to transmit/receive radio signals comprising information received/transmitted by the first network node 110 and/or the second network node 120, depending e.g. on the geographical position of the user equipment 130 and/or load balancing between the first and second network nodes 110, 120.

The first network node 110 may comprise, or be referred to as e.g. a macro node, base station, macro base station, NodeB, evolved Node B (eNB, or eNode B), base transceiver station, Access Point Base Station, base station router, pico node, micro base station, pico base station, femto base station, Home eNodeB, relay and/or repeater or any other node configured for communication with the user equipment 130 over a wireless interface, depending e.g. on the radio access technology and technical terminology used. In the rest of the disclosure, the term "first network node" will be used for the first network node 110, in order to facilitate the comprehension of the present solution.

The second network node 120 may comprise, or be referred to as e.g. a pico node, base station, macro base station, macro node, NodeB, evolved Node B (eNB, or eNode B), base transceiver station, Access Point Base Station, base station router, micro base station, pico base station, femto base station, Home eNodeB, relay and/or repeater or any other network node configured for communication with the user equipment, 130 over a wireless interface, depending e.g. on the radio access technology and terminology used. In the rest of the disclosure, the term "second network node" will be used for the second network node 120, in order to facilitate the comprehension of the present solution.

The second network node 120 may have a lower downlink power capacity than the first network node 110, according to some embodiments.

Further, according to some embodiments further nodes, such as an Operation & Management node (O&M), or other network nodes, may be comprised in the wireless communication network 100.

The first network node 110 and the second network node 120 may communicate over an interface 150, which may comprise any appropriate intra base station communication link interface such as X2 or other backhaul interfaces.

The first network node 110 is defining a first cell 115 and the second network node 120 may define a second cell 125. In case the second network node 120 have a lower downlink power capacity than the first network node 110, the first cell 115 may be referred to as a macro cell while the second cell 125 may be referred to as a pico cell, according to some embodiments.

The purpose of the illustration in Figure 2 is to provide a general overview of the present mthods and the functionalities involved.

The user equipment 130 may comprise or be represented by e.g. a wireless communication terminal, a mobile station (MS), a mobile cellular phone, a Personal Digital Assistant (PDA), a wireless platform, a laptop, a computer, a node or any other kind of device configured to communicate wirelessly with the first network node 110 and/or the second network node 120.

The wireless communication network 100 thus is configured for transmission/reception of information using a plurality of network nodes 110, 120 and user equipment 130. The expression "downlink" (DL) is in the present context used to specify the transmission from the network nodes 110, 120 to the user equipment 130, while the expression "uplink" (UL) is used to denote the transmission from the user equipment 130 to the network nodes 110, 120.

The presently described method is applicable on any wireless communication network 100 comprising a first network node 110 and a second network node 120. According to some embodiments, the wireless communication network 100 may be a heterogeneous wireless communication network comprising network nodes 110, 120 with different power capability and downlink power levels (which is characteristics of a heterogeneous wireless communication network).

It may be noted that the present method, or at least some aspects of the present method, may be performed in the first network node 110, in the second network node 120 and/or in any other network node, according to different embodiments, without departing from the present solution.

A general advantage of the present method is to configure the second network node 120 such that signals to/from the user equipment 130 may be sent/received with the second network node mode (cell mode or beam mode) thereby allowing for a dynamic trade-off between the benefits of operating the second network node 120 as a cell of its own or as beam extensions of the first network node 110, leading to a possibility for more optimized, or at least somewhat improved system performance and service provisioning in different scenarios.

The configuration may according to some alternative embodiments be made based on the received signal power of signals received from the first network node 110 and the second network node 120 respectively, or any other appropriate measurement, such that the configuration which renders the lowest path loss is selected.

**Figure 3A** depicts another embodiment of the wireless communication network 100, comprising a first network node 110 such as e.g. a macro node or base station, and a second network node 120 such as e.g. a pico node. Further Figure 3A disclose a user equipment 130, configured to transmit radio signals to be received by the first network node 110 and/or the second network node 120, depending e.g. on the geographical position of the user equipment 130 and/or load balancing between the network nodes 110, 120.

The second network node 120 of a heterogeneous deployment may correspond to a cell of its own, i.e. a second cell 125, or pico cell, see Figure 3A.

Figure 3A thus illustrates a heterogeneous deployment where the second network node 120 corresponds to a cell of its own, i.e. a second cell 125, or pico cell. The suffixes "p" and "m" indicate signals/channels utilized in the second cell 125 and a first cell 115, respectively.

Thus, in addition to downlink and uplink data transmission/reception, the second network node 120 also transmits the full set of common signals/channels associated with a cell 115, 125, when operating in cell mode. In the 3GPP LTE context this may comprise Primary and Secondary Synchronization Signals (PSS and SSS) corresponding to the Physical Cell Identity of the second cell 125. Also, the second network node 120 also transmits Cell-specific Reference Signals (CRS), also corresponding to the Physical Cell Identity of the second cell 125. The CRS may e.g. be used for downlink channel estimation to enable coherent demodulation of downlink transmissions. In addition, the second network node 120 further transmits a Broadcast channel (BCH), with corresponding pico-cell system information.

As the second network node 120 transmits the common signals/channels when operating in cell mode, the corresponding second cell 125 may be detected and selected (i.e. connected to) by a user equipment unit 130.

If the second network node 120 in cell mode corresponds to a cell of its own, a pico cell, also so-called L1/L2 control signalling on a physical channel such as e.g. the Physical Downlink Control Channel (PDCCH), which may be transmitted from the second network node 120 to connected user equipments 130, in addition to downlink data transmission on the Physical Downlink Shared Channel (PDSCH) physical channel. The L1/L2 control signalling e.g. provides downlink and uplink scheduling information and Hybrid- Automatic Repeat- reQuest (HARQ)-related information to user equipments 130 within the cell 125.

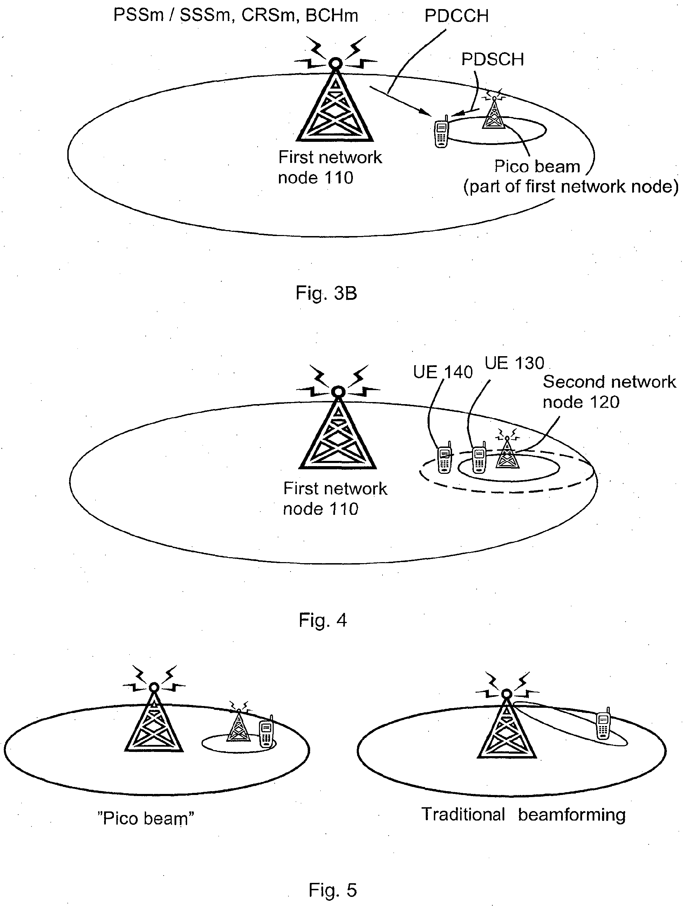

Alternatively, as illustrated in **Figure 3B,** a second network node 120 within a heterogeneous deployment may not correspond to a cell of its own but may just provide a data-rate and capacity "extension" of the overlaid first cell 115. This may be referred to as the second network node is operating in beam mode, or pico beam mode. In this case, neither signals/channels such as e.g. PSS/SSS, CRS, and BCH, nor the L1/L2 control signalling on PDCCH, may be transmitted from the second network node 120. Instead, PDSCH is transmitted from the second network node 120. To allow for demodulation and detection of the PDSCH according to some embodiments, despite the fact that no CRS may be transmitted from the second network node 120, so-called user equipment-specific reference signals may be transmitted from the second network node 120 together with the PDSCH. The user equipment-specific reference signals may then be used by the user equipment 130 for PDSCH demodulation/detection.

User equipment-specific reference signals may be embedded only in the resource blocks to which the PDSCH is mapped for each user equipment 130, 140 which are specifically configured to receive their downlink data transmission in this mode.

**Figure 4** illustrates yet an embodiment of the present solution. A second network node 120 configured to correspond to a cell 125 could also, simultaneously, operate as a beam-extension to the first cell 115 when communicating with at least some user equipment 130 according to some embodiments.

In the illustrated scenario, a first user equipment 130 is communicating with the second network node 120 in cell mode while a second user equipment 140 is communicating with the second network node 120 in beam mode.

Thereby the first user equipment 130 may be connected to the second network node 120 such that control signalling and data transmissions are transmitted between the second network node 120 and the first user equipment 130. At the same time, for the second user equipment 140, the control signalling may be transmitted from the first network node 110 while downlink and/or uplink data transmissions are transmitted between the second network node 120 and the at least one user equipment 140.

In the case when the second network node 120 does not correspond to a cell of its own, as described above, the transmission over the second network node 120 may essentially be equivalent to beam-formed transmission within the first cell 115. The only difference to "normal" beam forming is that, in this case, the beam may be "localized" around the second network node 120, rather than having the "traditional beam shape" originating at the first network node 110, see **Figure 5.**

Note that, regardless of if the second network node 120 corresponds to a cell of its own, see Figure 3A or just creates a "pico beam" extension of the first cell 115, see Figure 3B, uplink transmissions, both uplink data transmission on the PUSCH physical channel and uplink L1/L2 control signalling on the physical uplink control channel (PUCCH), may still be received at the second network node 120 according to some embodiments.

According to the present solution, the second network node 120 may operate in both of the two modes of operation described above, i.e. either corresponding to a cell 125 of its own as described in Figure 3A or creating a "beam"-extension of the first cell 115 as further described in conjunction with Figure 3B.

Thus, according to at least one embodiment, the present solution provides a methods and nodes for dynamically deciding, with respect to one or more user equipment 130, 140, whether to operate the second network node 120 in cell mode or in beam mode. For example one or more nodes in the wireless communication network such as the first network node 110, e.g. the base station managing the first cell 115, may obtain information that directly or indirectly indicate whether the second network node 120 situated within the first cell 115, or the macro cell, may be configured to operate in cell mode or in beam mode. The determination may be made with respect to all user equipment 130, 140 served by the second network node 120, or with respect to particular user equipment 130 served by the second network node 120. Further, different determinations may be made with respect to different user equipment 130, 140, or groups of user equipment 130, 140 according to some embodiments. Note that the information obtained for making the configuration decision concerning the second network node 120, may be directly evaluated to make the configuration decision, or may be processed, e.g. by computing a mathematical function such as e.g. a ratio, enabling a decision to be be taken on data derived from the obtained data.

In an exemplary embodiment, the second network node 120 may be dynamically configured to either correspond to a cell of its own as illustrated in Figure 3A, i.e. a second cell 125, or as a beam-extension of the first cell 115 within which coverage area the second network node 120 is deployed, as illustrated in Figure 3B. In practice this implies that the second network node 120 may be configured to transmit, alternatively not to transmit, cell-specific common signals/channels such as e.g. PSS/SSS, CRS, and BCH/system information. In the former case, also L1/L2 control signalling may be transmitted from the second network node 120 while, in the later case, the L1/L2 control signalling may be transmitted from the first network node 110 even when PDSCH (+ associated user equipment-specific reference signals) is transmitted to the user equipment 130 from the second network node 120. The configuration of the second network node 120 as a cell i.e. a second cell 125 or as a beam-extension of the first cell 115 may e.g. depend on the traffic situation, e.g. the number of user equipments 130 that simultaneously desires to access the first network node 110 and/or the second network node 120, load balancing between the network nodes 110, 120. According to some embodiments, the number of user equipments 130 that simultaneously desires to access the first network node 110 and/or the second network node 120 may be measured. Such measurement may be repeated at a predetermined interval according to some embodiments.

When operating as a beam extender of the first network node 110, the second network node 120 may either create a downlink beam (PDSCH transmitted from the second network node 120), an uplink beam (PUSCH/PUCCH received at the second network node 120) or both an uplink and a downlink beam (PDSCH transmitted from, and PUSCH/PUCCH received at, the second network node 120).

In another exemplary embodiment, the second network node 120 may correspond to a second cell 125 according to Figure 3A and may be selected as the cell to connect to by some user equipments 130. However, it may simultaneously operate as a beam-extension of the first cell 115 to other user equipment 140. Thus some user equipment 130, 140 may be connected to the first cell 115, with L1/L2 signalling on PDCCH transmitted from the corresponding first network node 110, but PDSCH transmission as well as uplink reception is done from/at the second network node 120. Note that, in this case certain cell-specific common signals/channels such as e.g. PSS/SSS, Cell-specific RS and/or BCH are transmitted from the second network node 120, as it is a cell of its own in relation to at least some user equipment 130, 140.

In a typical case, user equipments 130 situated relatively close to the second network node 120 may select the second cell 125 as the cell to connect to. However, another user equipment 140 situated further away from the second network node 120, but with the path loss to the second network node 120 still being lower than the path loss to the first network node 110, the second network node 120 may operate as a beam extension of the first network node 110, according to some embodiments.

The selection of which cell 115, 125 to connect to, or generally, which network node(s) 110, 120 that are involved in downlink transmission and uplink reception to/from a particular user equipment 130, 140 may be implemented in several ways. The decision may either be taken by the user equipment 130, 140 i.e. terminal, which may then inform the network nodes 110, 120 and/or possibly other network nodes about the decision, at least from a downlink transmission perspective, or by the network, i.e. any of the network nodes 110, 120.

One example may be to apply different thresholds to the ratio of the received powers, as measured by the user equipment 130, 140, between the CRS or the PSS/SSS of the first node 110 and the second node 120 respectively.

When the power ratio is lower than a first threshold value T1, the user equipment 130, 140 may select the second network node 120 to connect to and L1/L2 control signalling may be transmitted to the user equipment 130, 140 in addition to PDSCH. Thus a power ratio below the first threshold value T1 may render the second network node 120 to operate in cell mode when communicating with that at least one user equipment 130, 140.

When the power ratio is exceeding the first threshold value T1, but being lower than a second threshold value T2, the second network node 120 may be determined to operate in beam mode when communicating with the at least one user equipment 130, 140. The control signalling may then be transmitted between first network node 110 and the at least one user equipment 130, 140, while all data transmissions may be made between the second network node 120 and the at least one user equipment 130, 140. Thus the user equipment 130, 140 may select the first node 110 to connect to, i.e. L1/L2 control signalling may be transmitted to the user equipment 130, 140 from the first node 110. However, the PDSCH is still transmitted from the second network node 120.

One could also envision a third threshold value T3 according to some embodiments. If the power ratio is exceeding the second threshold value T2 but is lower than the third threshold value T3 the second network node 120 may be determined to operate in beam mode when communicating with the at least one user equipment 130, 140. The control signalling may be transmitted between the first network node 110 and the at least one user equipment 130, 140. Downlink data transmissions may be transmitted from the first network node 110 to be received by the at least one user equipment 130, 140, while uplink data transmissions from the at least one user equipment 130, 140 may be received by the second network node 120. Thus PDSCH is not transmitted from the second network node 120, but the uplink transmissions from the user equipment 130, 140 may be received at the second network node 120.

It may be noted that the received power discussed above may be measured by the user equipment 130, 140 i.e. the mobile terminal but the actual decision described above may be carried out by the network i.e. the network node 110, 120 according to some embodiments. As an example, the user equipment 130, 140 may measure Reference Signal Received Power (RSPR), as defined in the 3GPP specification, of signals emitted from the different network nodes 110, 120. The wireless communication network 100, i.e. the first network node 110 or alternatively the user equipment 130, 140 may then calculate a function f of the RSRP measurements, e.g. the ratio between them and compares this with a threshold value.

According to some embodiments, the function f may be a ratio between the measured RSPR of the first network node 110 and the second network node 120, such that e.g.

$$f(RSRP110, RSRP120) = \frac{RSRP(110)}{RSRP(120)}$$

where RSRP (110) may be the Reference Signal Received Power of the first network node 110, while RSRP (120) may be the Reference Signal Received Power of the second network node 120. However, the function f(RSRP120, RSRP110) may be differently defined according to some embodiments, such as e.g. completely inversed. In the latter case, all comparisons made with threshold values would also be inversed, according to some embodiments.

A comparison may further be performed between the computed function f(RSRP110, RSRP120) and any, some or all of the threshold values T1, T2 and/or T3.

$$f(RSRP110, RSRP120) \leq T1 \qquad \text{(condition 1)}$$

If condition 1 is fulfilled, this may result in that the user equipment 130, 140 connects to the second network node 120. PDSCH and PDCCH may be transmitted from the second network node 120. PUSCH /PUCCH may be received at the second network node 120.

$$T1 < f(RSRP110, RSRP120) \leq T2 \qquad \text{(condition 2)}$$

If condition 2 is fulfilled, this may result in that the user equipment 130, 140 connects to the first network node 110. PDSCH may be transmitted from the second network node 120. PUSCH /PUCCH may be received at the second network node 120.

$$T2 < f(RSRP110, RSRP120) \leq T3 \qquad \text{(condition 3)}$$

If condition 3 is fulfilled, this may result in that the user equipment 130, 140 connects to the first network node 110. PDSCH may be transmitted from the first network node 110. PUSCH /PUCCH may be received at the second

network node 120.

$$T3 < f(RSRP110, RSRP120) \qquad \text{(condition 4)}$$

If condition 4 is fulfilled, this may result in that the user equipment 130, 140 connects to the first network node 110. PDSCH and PUSCH /PUCCH may be communicated with the first network node 110. The second network node 120 may then not participate in the communication concerning the user equipment 130, 140 at all.

To facilitate this type of operation, new trigger conditions when the user equipment 130, 140 may transmit an RSRP report may be an advantage, e.g. separate triggers for measurements of signals from different network nodes 110, 120. These trigger conditions may be configured by the network, such as by the first network node 110, or the second network node 120.

Another possibility could be to use uplink measurements, for example based on so-called Sounding Reference Signals (SRS), emitted by the user equipment 130, 140. In this case the first network node 110 and/or the second network node 120 may measure the received signal strength from the user equipment 130, 140 and based on these measurements form a decision on which node(s) 110, 120 to be used for transmission and reception. The measured value based on SRS signalling may e.g. be compared with a threshold value, for making the decision.

According to some embodiments may a function f() comprise a ratio between the measured SRS of the user equipment 130, measured by first network node 110 and the measured SRS of the user equipment 130, measured by the second network node 120, such that e.g.

$$f(SRS110, SRS120) = \frac{SRS(110)}{SRS(120)}$$

where SRS (110) thus may be the SRS of the user equipment 130 measured by the first network node 110, while SRS (120) may be the SRS of the user equipment 130 measured by the second network node 120. However, according to some embodiments may the function f(SRS110, SRS120) be differently defined, such as e.g. completely inversed. In the latter case, all comparisons made with threshold values would also be inversed, according to some embodiments.

A comparison may further be performed between the computed function f(SRS110, SRS120) and any, some or all of the threshold values T1, T2 and/or T3.

$$IF\ f(SRS110, SRS120) \le T1 \qquad \text{(condition A)}$$

If condition A is fulfilled, this may result in that the user equipment 130, 140 connects to the second network node 120. PDSCH and PDCCH may be transmitted from the second network node 120. PUSCH /PUCCH may be received at the second network node 120.

$$IF\ T1 < f(SRS110, SRS120) \le T2 \qquad \text{(condition B)}$$

If condition B is fulfilled, this may result in that the user equipment 130, 140 connects to the first network node 110. PDSCH may be transmitted from the second network node 120. PUSCH /PUCCH may be received at the second network node 120.

$$IF\ T2 < f(SRS110, SRS120) \le T3 \qquad \text{(condition C)}$$

If condition C is fulfilled, this may result in that the user equipment 130, 140 connects to the first network node 110. PDSCH may be transmitted from the first network node 110. PUSCH /PUCCH may be received at the second network node 120.

$$\text{IF T3} < \text{f(SRS110, SRS120)} \qquad \text{(condition D)}$$

If condition D is fulfilled, this may result in that the user equipment 130, 140 connects to the first network node 110. PDSCH and PUSCH /PUCCH may be communicated with the first network node 110. The second network node 120 may then not participate in the communication concerning the user equipment 130, 140 at all.

Non-limiting example advantages provided by embodiments of the present solution, comprise allowing for a dynamic trade-off between the benefits/drawbacks of operating the second network node 120 as a cell of its own or as beam extensions of the first network node 110, leading to a possibility for more optimized, or at least somewhat improved system performance and service provisioning in different scenarios.

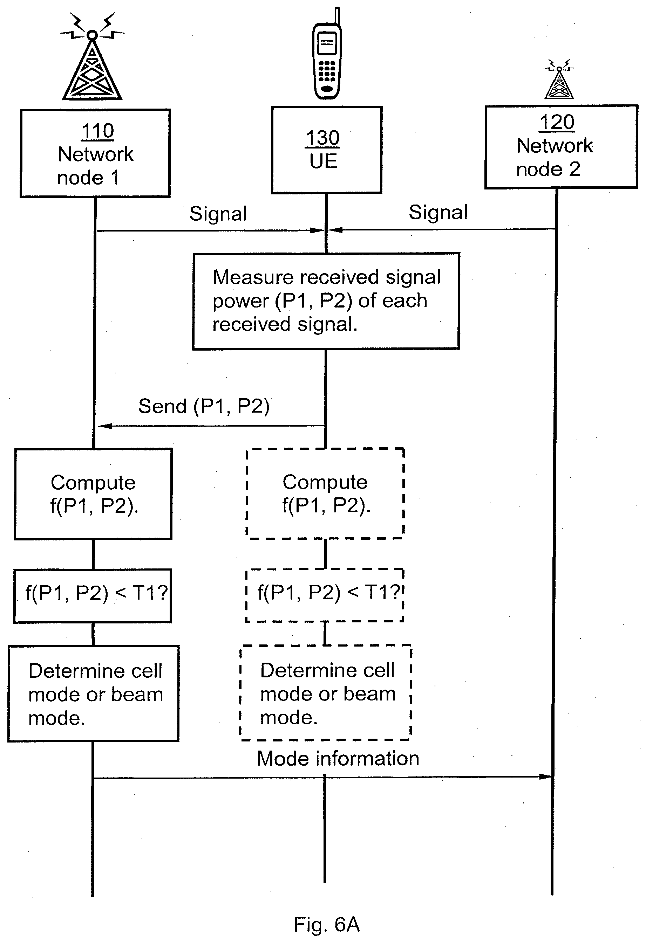

**Figure 6A** is a combined block diagram and flow chart illustrating an embodiment within a wireless communication network 100, for the purpose of configuring a second network node 120 to operate either in cell mode or in beam mode in relation to at least one user equipment 130, 140.

The method may comprise a number of actions, in order to correctly perform the configuration of the second network node 120 in the wireless communication network 100. The actions may be performed in a somewhat different order than the order in which they are discussed indicates, according to different embodiments.

Signals emitted from the first network node 110, and the second network node 120 are received by the user equipment 130. The signals may be e.g. reference signals such as e.g. CRS, PRS, PSS, SSS or any other signal which may be appropriate for applying measurements of the received signal power or signal quality.

The user equipment 130 may measure the received power, or the quality of the received signals from respectively the first network node 110, and the second network node 120, according to some embodiments.

The measurement may comprise RSRP, or any other appropriate measurements of the received signal power, or the received signal quality such as e.g. Reference Signal Received Quality (RSRQ), Received Signal Strength Indicator (RSSI), Received Signal Code Power (RSCP), Received Signal Power (RSP) etc.

According to some embodiments, the user equipment 130 may be triggered by the first network node 110 to measure the received signal power and/or quality and provide the measurement to the first network node 110.

Thus the signal measurements of the received signal power of the signals transmitted from the first network node 110 and the second network node 120 may be transmitted to the first network node 110.

The first network node 110, or alternatively the user equipment 130, may compute a function based on the received signal power measurements. Such function may comprise a ratio between the received measurements.

The measurements, and/or a function based on the measurements may then be compared with a threshold value. The threshold value may be predetermined, or obtained according to different embodiments.

Just to briefly mention a non limiting example of such function and comparison with a threshold value, the following example is described.

Threshold value may be preset to e.g. 1.6. assume

$$f(P1, P2) = \frac{P1}{P2} = 1.5$$

thus the comparison between f(P1, P2) and the threshold value render that f(P1, P2) < threshold value (1.6), which comparison may be used as a basis for determining the operative mode of the second network node 120.

The second network node 120 may according to some embodiments be configured in cell mode in relation to the user equipment 130 if the f(P1, P2) is lower than the threshold value, as is the case in the illustrated example. Otherwise, if the f(P1, P2) exceeds the threshold value, the second network node 120 may be configured in beam mode.

As already mentioned, the second network node 120 may be configured to operate in cell mode and in beam mode simultaneously according to some embodiments. Thereby the second network node 120 may operate in beam mode in relation to some user equipment 130, while at the same time operating in cell mode in relation to some other user equipment 140. However, according to some embodiments, the second network node 120 may be configured to operate either in cell mode or in beam mode in relation to all user equipment 130, 140 to be served by the second network node 120.

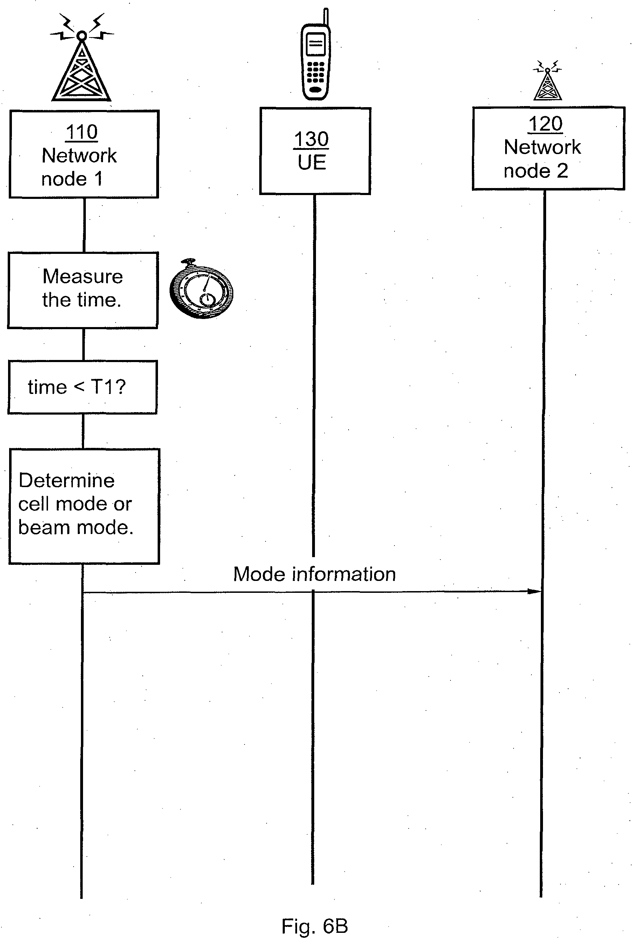

Figure 6B is a combined block diagram and flow chart illustrating an embodiment within a wireless communication network 100, for the purpose of configuring a second network node 120 to operate either in cell mode or in beam mode in relation to at least one user equipment 130, 140.

The decision whether to configure the second network node 120 to operate in cell mode or in beam mode may according to some embodiments be based on the number of user equipment 130, 140 that momentarily attempt to access the second network node 120, or that are present within the second cell 125. If few user equipment 130, 140 attempt to access the second network node 120, then the second network node 120 may be configured in beam mode. However, there may be a capacity limit of the available number of control signals that could be managed by the first network node 110. Such limit may be e.g. 20 user equipment 130, 140, according to some embodiments. However, with an increasing number of user equipment 130, 140, it may instead be an advantage to switch configuration to cell mode, according to some embodiments.

The number of user equipment 130, 140 that momentarily attempt to access the second network node 120 may be time dependent according to some embodiments. For example, few user equipment 130, 140 may be present at night time, while more user equipment 130, 140 may be active and present within the second cell 125 at day time. Such information may be extracted from statistical studies, or real time measurements on the number of user equipment 130, 140 present at the moment. Alternatively; such information may be based on a reasonable estimation based on e.g. experience from user behaviour pattern in other cells.

The number of user equipment 130, 140 that momentarily attempt to access the second network node 120 may according to some embodiments be time dependent counted from the moment in time when the second network node 120 is set up. Thus the second network node 120 may be configured from the beginning to operate in beam mode, and later it may be configured to operate in cell mode, when a certain predetermined time limit has been achieved.

Such time measurements, and/or, alternatively, counting of number of user equipment 130, 140 that momentarily attempt to access the second network node 120 may be obtained by the first network node 110, compared with a threshold value, or alternatively a plurality of threshold values. Thereby the second network node 120 may be switched between cell mode and beam mode depending on the hour of the day according to some exemplary embodiments.

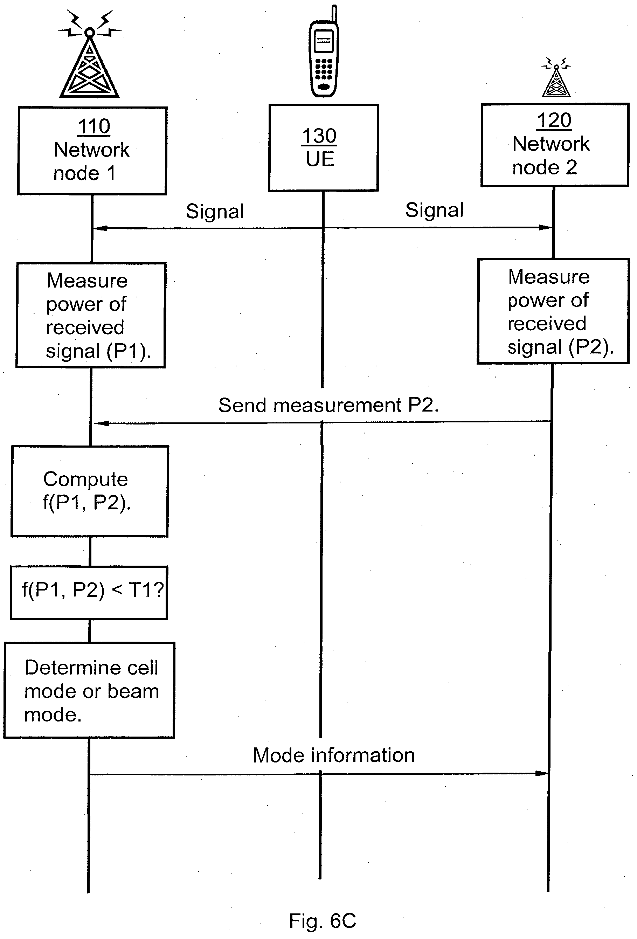

Figure 6C is a combined block diagram and flow chart illustrating an embodiment within a wireless communication network 100, for the purpose of configuring a second network node 120 to operate either in cell mode or in beam mode in relation to at least one user equipment 130, 140.

The first network node 110 and the second network node 120 respectively may according to some embodiments measure the received signal strength, or determine the signal quality of signals transmitted by the user equipment 130, 140. Such signals transmitted by the user equipment 130, 140 may comprise Sounding Reference Signals (SRS), according to some embodiments or any other appropriate signal. The first network node 110 may obtain the measurement from the second network node 120, by for example sending a request to the second network node 120 for sending the measurement.

Further, the first network node 110 may compute a function f() based on the obtained measurements, rendering a value. Such function may comprise a ratio of the received power of the respective signals received from the user equipment 130, 140. The obtained measurements, or the computed value may then be compared with a threshold value. Based on the outcome of such comparison may it be determined how to configure the second network node 120.

Thus, as an example, if the received signal power of the signal transmitted from the user equipment 130, 140 received by the second network node 120 is higher than the received signal power of the signal transmitted from the user equipment 130, 140 received by the first network node 110, the second network node 120 may be configured in cell mode, otherwise in beam mode, according to some embodiments.

According to some embodiments, a ratio between the received signal power of the signal transmitted from the user equipment 130, 140 received by the second network node 120 and the received signal power of the signal transmitted from the user equipment 130, 140 received by the first network node 110 may be computed and compared with a threshold value. If the threshold value is exceeded, the second network node 120 may be configured in beam mode, otherwise in cell mode, according to some embodiments.

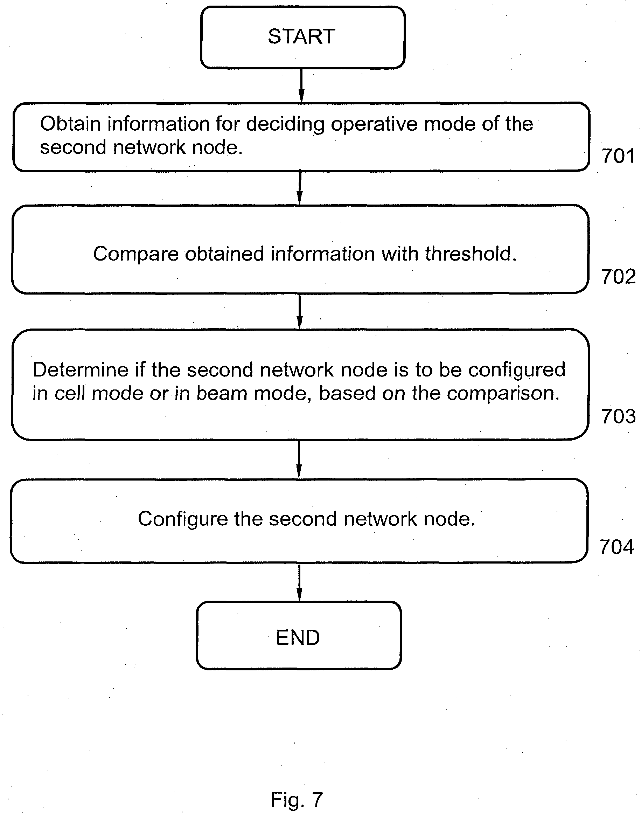

**Figure 7** is a schematic block diagram illustrating an embodiment of the present method in a first network node 110. The first network node 110 may be represented by e.g. a base station, macro node or the like. The method aims at configuring a second network node 120 to operate either in cell mode or in beam mode when communicating with at least one user equipment 130, 140. The second network node 120 may be represented by e.g. a pico node, a base station or the like. The first network node 110 and the second network node 120 may be comprised in a wireless communication network 100, and configured to communicate with the at least one user equipment 130, 140.

The control signalling and data transmissions may be transmitted between the second network node 120 and the at least one user equipment 130, 140, when the second network node 120 is configured in cell mode.

At least some control signalling may be transmitted between the first network node 110 and the at least one user equipment 130, 140 when the second network node 120 is configured in beam mode, while data transmissions may be transmitted between the second network node 120 and the at least one user equipment 130, 140.

The second network node 120, when configured to operate in beam mode, may be enabled to create any of a downlink beam, an uplink beam or both an uplink beam and a downlink beam according to some embodiments.

By being adapted to configure the second network node 120 in beam mode or cell mode depending on the traffic situation within the cells 115, 125, and also depending on which of the first network node 110 and second network node 120 from which the user equipment 130, 140 receives the strongest signal, signals may be transmitted uplink with less power, which may lead to reduced energy consumption at the user equipment 130, 140, and also to reduced (risk of) interference with uplink signalling from other user equipments 130, 140. Thereby is an improved performance within the wireless communication system 100 achieved.

The method may comprise a number of actions 701-704, in order to correctly configure the second network node 120. The actions may be performed in a somewhat different order than the enumeration indicates, according to different embodiments. Further, it is to be noted that some embodiments of the actions are describing alternative embodiments.

**Action 701**

Information for determining the operative mode of the second network node 120 is obtained.

The information for determining the operative mode of the second network node 120 to be obtained may comprise e.g. the number of user equipment 130, 140 that momentarily attempt to access the second network node 120; the time; the time of the day; the received power of a signal or signals received from the first network node 110, and/or the second network node 120 respectively, as measured by the user equipment 130, 140; the Reference Signal Received Power (RSPR) measured by the user equipment 130, 140 on a signal or signals received from the first network node 110, and/or the second network node 120; the received quality of a signal or signals received from the first network node 110, and/or the second network node 120 respectively, as measured by the user equipment 130, 140; the received signal strength of sounding reference signals (SRS) emitted by the user equipment 130, 140 and measured by the first network node 110 and/or the second network node 120, according to some embodiments.

The first network node 110 may request information for determining the operative mode of the second network node 120 either from the second network node 120, or from the user equipment 130, 140. As a response to the request, the information may be received from the second network node 120, or from the user equipment 130, 140.

**Action 702**

The obtained information for determining the operative mode of the second network node 120, is compared with a threshold value.

The comparison may comprise computing a function such as e.g. a ratio, comprising the received power of a signal or signals received from the first network node 110, divided with the received power of a signal or signals received from the second network node 120, and comparing that ratio with the threshold value according to some embodiments.

The comparison may according to some embodiments comprise comparing the obtained information, or a ratio comprising the information, with a plurality of threshold values.

**Action 703**

The operative mode of the second network node 120 is determined, based on the made comparison between the obtained information and the threshold value.

The determination of the operative mode of the second network node 120, may according to some embodiments be based on the made comparison with a threshold value, such that:

if the obtained information for determining the operative mode of the second network node 120 comprises a value lower than the threshold value, the second network node 120 may be determined to operate in cell mode when communicating with that at least one user equipment 130, 140; and

if the obtained information for determining the operative mode of the second network node 120 comprises a value exceeding the threshold value, the second network node 120 may be determined to operate in beam mode when communicating with that the at least one user equipment 130, 140.

However, the determination of the operative mode of the second network node 120 may according to some embodiments be based on comparisons made with a plurality of threshold values, such that:

if the obtained information for determining the operative mode of the second network node 120 comprises a value lower than a first threshold value, the second network node 120 may be determined to operate in cell mode when communicating with that at least one user equipment 130, 140;

if the obtained information for determining the operative mode of the second network node 120 comprises a value exceeding the first threshold value, but being lower than a second threshold value, the second network node 120 may be determined to operate in beam mode when communicating with the at least one user equipment 130, 140, wherein control signalling may be transmitted between first network node 110 and the at least one user equipment 130, 140, while all data transmissions may be made between the second network node 120 and the at least one user equipment 130, 140; and

if the obtained information for determining the operative mode of the second network node 120 comprises a value exceeding the second threshold value, but being lower than a third threshold value, the second network node 120 may be determined to operate in beam mode when communicating with the at least one user equipment 130, 140, wherein control signalling may be transmitted between the first network node 110 and the at least one user equipment 130, 140, downlink data transmissions may be transmitted from the first network node 110 to the at least one user equipment 130, 140 while uplink data transmissions may be transmitted from the at least one user equipment 130, 140 to the second network node 120.

**Action 704**

The second network node 120 is configured in cell mode or in beam mode when communicating with the at least one user equipment 130, 140, according to the determined operative mode of the second network node 120.
The configuration of the operative mode of the second network node 120 may be performed in relation to all user equipment 130, 140 to be served by the second network node 120 according to some embodiments.
The configuration of the operative mode of the second network node 120 may according to some embodiments be performed in relation to all user equipment 130, 140 momentarily served by the second network node 120.
The configuration of the operative mode of the second network node 120 may according to some embodiments be performed in relation to all user equipment 130, 140 served by the second network node 120 until a new configuration of the operative mode of the second network node 120 is set.
The configuration of the operative mode of the second network node 120 may be performed in relation to all user equipment 130, 140 to be served by the second network node 120 according to some embodiments, for a period of time to be determined.
However, the configuration of the operative mode of the second network node 120 may be performed in relation to each individual user equipment 130, 140 to be served by the second network node 120, such that the second network node 120 may be configured to operate in cell mode when communicating with one or more first user equipment 130 and simultaneously operate in beam mode when communicating with one or more second user equipment 140.

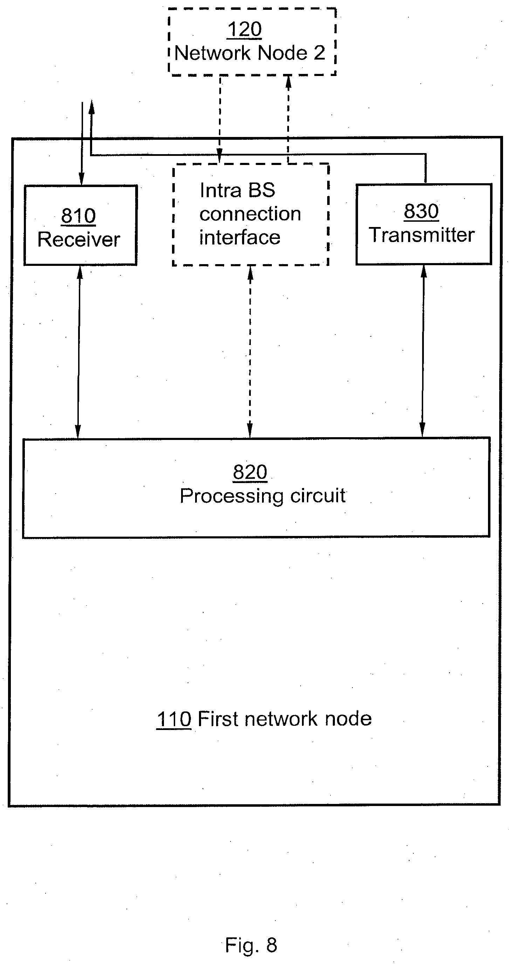

**Figure 8** is a block diagram illustrating embodiments of a first network node 110. The first network node 110 may be represented by e.g. a base station, macro node or the like. The first network node 110 is adapted to configure a second network node 120 to operate either in cell mode or in beam mode when communicating with at least one user equipment 130, 140. The second network node 120 may be represented by e.g. a pico node, a base station or the like. The first network node 110 and the second network node 120 may be comprised in a wireless communication network 100, and adapted to communicate with the at least one user equipment 130, 140.
The control signalling and data transmissions may be transmitted between the second network node 120 and the at least one user equipment 130, 140, when the second network node 120 is configured in cell mode.
At least some control signalling may be transmitted between the first network node 110 and the at least one user equipment 130, 140 when the second network node 120 is configured in beam mode, while data transmissions may be transmitted between the second network node 120 and the at least one user equipment 130, 140. The first network node 110 is configured to perform any, some or all of the described actions 701-704. The first network node 110 comprises a processing circuit 820. The processing circuit 820 is configured to obtain information for deciding the operative mode of the second network node 120. Further, the processing circuit 820 is configured to compare the obtained information with a threshold value. Further the processing circuit 820 is configured to determine the operative mode of the second network node 120, based on the made comparison. In addition, the processing circuit 820 is adapted to configure the second network node 120 in cell mode or in beam mode, when communicating with the at least one user equipment 130, 140, according to the determined operative mode of the second network node 120.
The processing circuit 820 may be represented by e.g. a Central Processing Unit (CPU), processor, processing unit, microprocessor, or other processing logic that may interpret and execute instructions. The processing circuit 820 may further perform data processing functions for inputting, outputting, and processing of data comprising data buffering and device control functions, such as call processing control, user interface control, or the like.
The first network node 110 may comprise a receiver 810. The receiver 810 may be configured to receive information for deciding the operative mode of the second network node 120, according to some embodiments.
Further, according to some embodiments the first network node 110 may comprise a transmitter 830. The transmitter 830 may be configured to transmit radio signals.
For the sake of clarity, any internal electronics of the first network node 110 not completely indispensable for understanding the present method has been omitted from Figure 8.

Further, it is to be noted that some of the described units 810-830 comprised within the first network node 110 in the wireless communication network 100 may be regarded as separate logical entities but not with necessity separate physical entities. To mention just one example, the receiver 810 and the transmitter 830 may be comprised or co-arranged within the same physical unit, a transceiver, which may comprise a transmitter circuit and a receiver circuit, which transmits outgoing radio frequency signals and receives incoming radio frequency signals, respectively, via an antenna. The radio frequency signals transmitted by the first network node 110 may comprise both traffic and control signals e.g. paging signals/ messages for incoming calls, which may be used to establish and maintain a voice call communication with another party or to transmit and/or receive data, such as SMS, e-mail or MMS messages, with a remote user equipment, or other nodes.

The actions 701-704 to be performed in the first network node 110 may be implemented through one or more processing circuits 820 in the first network node 110 together with computer program code for performing the functions of the present actions 701-704. Thus a computer program product, comprising instructions for performing the actions 701-704 in the first network node 110 may configure the second node 120, when being loaded into the processing circuit 820.

The computer program product mentioned above may be provided for instance in the form of a data carrier carrying computer program code for performing at least some of the actions 701-704 according to the present solution when being loaded into the processing circuit 820. The data carrier may comprise e.g. a hard disk, CD ROM disc, memory stick, optical storage device, magnetic storage device or any other appropriate medium such as a disk or tape that may hold machine readable data. The computer program product may furthermore be provided as computer program code on a server and downloaded to the first network node 110 remotely, e.g. over an Internet or an intranet connection.

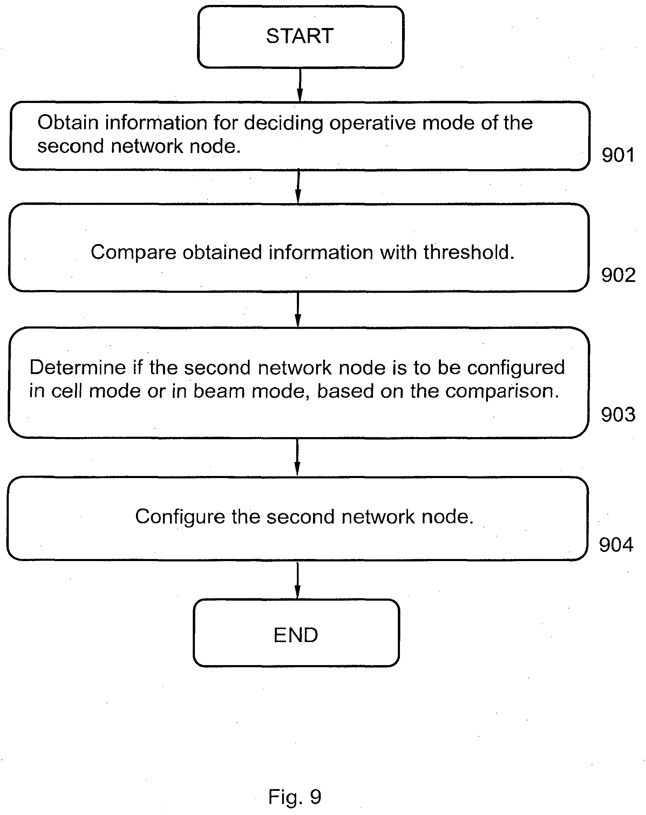

**Figure 9** is a schematic block diagram illustrating an embodiment of the present method in a user equipment 130, 140. The method aims at configuring a second network node 120 to operate either in cell mode or in beam mode when communicating with at least one user equipment 130, 140. The second network node 120 may be represented by e.g. a pico node, a base station or the like. A first network node 110 and the second network node 120 may be comprised in a wireless communication network 100, and configured to communicate with the at least one user equipment 130, 140. The first network node 110 may be represented by e.g. a base station or the like.

The control signalling and data transmissions may be transmitted between the second network node 120 and the at least one user equipment 130, 140, when the second network node 120 is configured in cell mode.

At least some control signalling may be transmitted between the first network node 110 and the at least one user equipment 130, 140 when the second network node 120 is configured in beam mode, while data transmissions may be transmitted between the second network node 120 and the at least one user equipment 130, 140.

The second network node 120, when configured to operate in beam mode, may be enabled to create any of a downlink beam, an uplink beam or both an uplink beam and a downlink beam according to some embodiments.

By being adapted to configure the second network node 120 in beam mode or cell mode depending on the traffic situation within the cells 115, 125, and also depending on which of the first network node 110 and second network node 120 from which the user equipment 130, 140 receives the strongest signal, signals may be transmitted uplink with less power, which may lead to reduced energy consumption at the user equipment 130, 140, and also to reduced (risk of) interference with uplink signalling from other user equipments 130, 140. Thereby is an improved performance within the wireless communication system 100 achieved.

The method may comprise a number of actions 901-904, in order to correctly configure the second network node 120. The actions may be performed in a somewhat different order than the enumeration indicates, according to different embodiments. Further, it is to be noted that some embodiments of the actions are alternative embodiments.

**Action 901**

Information for determining the operative mode of the second network node 120 is obtained.

The information for determining the operative mode of the second network node 120 to be obtained may comprise e.g. the number of user equipment 130, 140 that momentarily attempt to access the second network node 120; the time; the time of the day; the received power of a signal or signals received from the first network node 110, and/or the second network node 120 respectively, as measured by the user equipment 130, 140; the Reference Signal Received Power (RSPR) measured by the user equipment 130, 140 on a signal or signals received from the first network node 110, and/or the second network node 120; the received quality of a signal or signals received from the first network node 110, and/or the second network node 120 respectively, as measured by the user equipment 130, 140; the received signal strength of sounding reference signals (SRS) emitted by the user equipment 130, 140 and measured by the first network node 110 and/or the second network node 120, according to some embodiments.

The user equipment 130, 140 may request information for determining the operative mode of the second network node 120 either from the first network node 110 or from the second network node 120 according to some embodiments. As a response to the request, the information may be received from the first network node 110 or from the second network node 120.

### Action 902

The obtained information for determining the operative mode of the second network node 120, is compared with a threshold value.

The comparison may comprise computing a function such as e.g. a ratio, comprising the received power of a signal or signals received from the first network node 110, divided with the received power of a signal or signals received from the second network node 120, and comparing that ratio with the threshold value according to some embodiments.

The comparison may according to some embodiments comprise comparing the obtained information, or a ratio comprising the information, with a plurality of threshold values.

### Action 903

The operative mode of the second network node 120 is determined, based on the made comparison between the obtained information and the threshold value.

The determination of the operative mode of the second network node 120 may according to some embodiments be based on the made comparison with a threshold value, such that:

if the obtained information for determining the operative mode of the second network node 120 comprises a value lower than the threshold value, the second network node 120 may be determined to operate in cell mode when communicating with that at least one user equipment 130, 140; and

if the obtained information for determining the operative mode of the second network node 120 comprises a value exceeding the threshold value, the second network node 120 may be determined to operate in beam mode when communicating with that the at least one user equipment 130, 140.

However, the determination of the operative mode of the second network node 120, may according to some embodiments be based on comparisons made with a plurality of threshold values, such that:

if the obtained information for determining the operative mode of the second network node 120 comprises a value lower than a first threshold value, the second network node 120 may be determined to operate in cell mode when communicating with that at least one user equipment 130, 140;

if the obtained information for determining the operative mode of the second network node 120 comprises a value exceeding the first threshold value, but being lower than a second threshold value, the second network node 120 may be determined to operate in beam mode when communicating with the at least one user equipment 130, 140, wherein control signalling may be transmitted between first network node 110 and the at least one user equipment 130, 140, while all data transmissions may be made between the second network node 120 and the at least one user equipment 130, 140; and

if the obtained information for determining the operative mode of the second network node 120 comprises a value exceeding the second threshold value, but being lower than a third threshold value, the second network node 120 may be determined to operate in beam mode when communicating with the at least one user equipment 130, 140, wherein control signalling may be transmitted between the first network node 110 and the at least one user equipment 130, 140, downlink data transmissions may be transmitted from the first network node 110 to the at least one user equipment 130, 140 while uplink data transmissions may be transmitted from the at least one user equipment 130, 140 to the second network node 120.

### Action 904

The second network node 120 is configured in cell mode or in beam mode when communicating with the at least one user equipment 130, 140, according to the determined operative mode of the second network node 120.

The configuration of the operative mode of the second network node 120 may be performed in relation to all user equipment 130, 140 to be served by the second network node 120 according to some embodiments.

However, the configuration of the operative mode of the second network node 120 may be performed in relation to each individual user equipment 130, 140 to be served by the second network node 120, such that the second network node 120 may be configured to operate in cell mode when communicating with one or more first user equipment 130

and simultaneously operate in beam mode when communicating with one or more second user equipment 140.

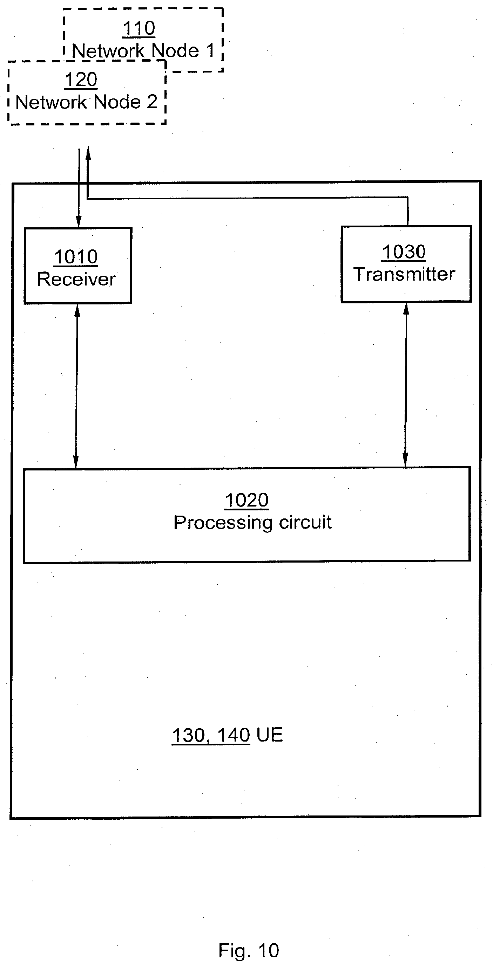

**Figure 10** is a block diagram illustrating embodiments of a user equipment 130, 140. The user equipment 130, 140 is adapted to configure a second network node 120 to operate either in cell mode or in beam mode when communicating with at least one user equipment 130, 140. The second network node 120 may be represented by e.g. a pico node, a base station or the like. The first network node 110 and the second network node 120 may be comprised in a wireless communication network 100, and adapted to communicate with the at least one user equipment 130, 140.

The control signalling and data transmissions may be transmitted between the second network node 120 and the at least one user equipment 130, 140, when the second network node 120 is configured in cell mode.

At least some control signalling may be transmitted between the first network node 110 and the at least one user equipment 130, 140 when the second network node 120 is configured in beam mode, while data transmissions may be transmitted between the second network node 120 and the at least one user equipment 130, 140. The user equipment 130, 140 is configured to perform any, some or all of the described actions 901-904. The user equipment 130, 140 comprises a processing circuit 1020. The processing circuit 1020 is configured to obtain information for deciding the operative mode of the second network node 120. Further, the processing circuit 1020 is configured to compare the obtained information with a threshold value. Further the processing circuit 1020 is configured to determine the operative mode of the second network node 120, based on the made comparison. In addition, the processing circuit 1020 is arranged to configure the second network node 120 in cell mode or in beam mode, when communicating with the at least one user equipment 130, 140, according to the determined operative mode of the second network node 120.

The processing circuit 1020 may be represented by e.g. a Central Processing Unit (CPU), processor, processing unit, microprocessor, or other processing logic that may interpret and execute instructions. The processing circuit 1020 may further perform data processing functions for inputting, outputting, and processing of data comprising data buffering and device control functions, such as call processing control, user interface control, or the like.

The user equipment 130, 140 may comprise a receiver 1010. The receiver 1010 may be configured to receive information for deciding the operative mode of the second network node 120, according to some embodiments.

Further, according to some embodiments, the user equipment 130, 140 may comprise a transmitter 1030. The transmitter 1030 may be configured to transmit radio signals.

For the sake of clarity, any internal electronics of the user equipment 130, 140, not completely indispensable for understanding the present method has been omitted from Figure 10.

Further, it is to be noted that some of the described units 1010-1030 comprised within the user equipment 130, 140 in the wireless communication network 100 may be regarded as separate logical entities but not with necessity separate physical entities. To mention just one example, the receiver 1010 and the transmitter 1030 may be comprised or co-arranged within the same physical unit, a transceiver, which may comprise a transmitter circuit and a receiver circuit, which transmits outgoing radio frequency signals and receives incoming radio frequency signals, respectively, via an antenna. The radio frequency signals transmitted by the user equipment 130, 140 may comprise both traffic and control signals e.g. paging signals/ messages for incoming calls, which may be used to establish and maintain a voice call communication with another party or to transmit and/or receive data, such as SMS, e-mail or MMS messages, with a remote user equipment, or other nodes.

The actions 901-904 to be performed in the user equipment 130, 140 may be implemented through one or more processing circuits 1020 in the user equipment 130, 140 together with computer program code for performing the functions of the present actions 901-904. Thus a computer program product, comprising instructions for performing the actions 901-904 in the user equipment 130, 140 may configure the second node 120, when being loaded into the processing circuit 1020.

The computer program product mentioned above may be provided for instance in the form of a data carrier carrying computer program code for performing at least some of the actions 901-904 according to some embodiments when being loaded into the processing circuit 1020. The data carrier may comprise e.g. a hard disk, CD ROM disc, memory stick, optical storage device, magnetic storage device or any other appropriate medium such as a disk or tape that may hold machine readable data. The computer program product may furthermore be provided as computer program code on a server and downloaded to the 901-904 remotely, e.g. over an Internet or an intranet connection.

## Additional particular example embodiments

In at least one embodiment is provided a method in a macro node 110 defining a macro cell 115, for configuring a pico node 120, situated within the macro cell, to operate either in cell mode, corresponding to a pico cell 125 of its own, or in beam mode, functioning as a beam-extension of the macro cell 115, in relation to at least one user equipment 130 to be served by the pico node 120 The method may comprise: obtaining decision relevant data, comparing the obtained decision relevant data against at least one threshold level value T1, T2, T3, determining if the pico node 120 is to be configured in cell mode or in beam mode, in relation to the at least one user equipment 130, based on the made comparison, and sending configuration information according to the determined configuration to the pico node 120.

According to one or more embodiments, the decision relevant data to be obtained may be related to the radio traffic situation within any of the macro cell 115 and/or the pico cell 125. For example, the data may comprise the number of user equipments 130 that simultaneously desires to access the pico node 120.

According to one or more embodiments, the decision relevant data may be obtained e.g. received, from the pico node 120, where e.g. signal measurements may be performed and provided to the macro node 110.

According to one or more embodiments, the action of obtaining decision relevant data may comprise firstly requesting decision relevant data from the pico node 120, and then receiving the decision relevant data from the pico node 120 as a response to the request.

According to one or more embodiments, the configuration signal sent to the pico node 120 may enable the pico node 120, when operating in beam mode, as a beam extender, to either create a downlink beam (PDSCH transmitted from the pico node 120), an uplink beam (PUSCH/PUCCH received at the pico node 120) or both an uplink and a downlink beam (PDSCH transmitted from, and PUSCH/PUCCH received at, the pico node 120).

According to one or more embodiments, the configuration of the pico node 120 into beam mode or cell mode may be performed for all user equipment 130 to be served by the pico node 120.

However, according to at least one embodiment, the configuration of the pico node 120 into beam mode or cell mode may be performed for each individual user equipment 130 to be served by the pico node 120 (or for subsets of the served users) such that the pico node 120 may be configured to operate in cell mode in relation to one or more first user equipments 130 and simultaneously operate in beam mode in relation to one or more second user equipments.

The decision relevant data to be obtained may according to some embodiments comprise received power ratio of a signal or signals received from the macro node 110, and/or the pico node 120, as measured by the user equipment 130.

Further, in at least one embodiment, the decision relevant data to be obtained may be a Reference Signal Received Power (RSPR) measured by the user equipment 130 on a signal or signals received from the macro node 110, and/or the pico node 120.

Still further, in at least one embodiment, the action of comparing the obtained decision relevant data against at least one threshold level value (T1, T2, T3) may comprise computing a ratio of the obtained RSPR of the pico node 120 and the obtained RSPR of the macro node 110.

Additionally, in one or more embodiments, the action of determining whether to configure the pico node 120 in cell mode or in beam mode, in relation to the at least one user equipment 130, may be based on the made comparison against at least one threshold level value (T1, T2, T3), such that if f(RSRPpico, RSRPmacro) < T1, the determination may be made to operate the pico node 120 in cell mode in relation to that at least one user equipment 130. Otherwise, if f(RSRPpico, RSRPmacro) > T1, the determination may be made to operate the pico node 120 in beam mode.

An arrangement in a macro node 110, defining a macro cell 115, may be configured to dynamically decide whether to operate a pico node 120, situated within the macro cell in either in a cell mode, where the pico node provides a pico cell 125 of its own, or in a beam mode, where the pico node functions as a beam-extension of the macro cell 115, in relation to at least one user equipment 130 to be served by the pico node 120. In at least one embodiment, the arrangement may comprise: a receiver, configured to receive decision relevant data, a comparison unit, configured to compare the obtained decision relevant data against at least one threshold level value (T1, T2, T3), a determining unit, configured to determine if the pico node 120 is to be configured in cell mode or in beam mode, in relation to the at least one user equipment 130, based on the made comparison, and a sender, configured to send configuration information according to the determined configuration to the pico node 120.

The terminology used in the disclosure of the exemplary embodiments illustrated in the accompanying drawings is not intended to be limiting of the present methods and nodes.

As used herein, the singular forms "a", "an" and "the" are intended to comprise the plural forms as well, unless expressly stated otherwise. It will be further understood that the terms "includes," "comprises," "including" and/or "comprising," when used in this specification, specify the presence of stated features, integers, steps, operations, elements, and/or components, but do not preclude the presence or addition of one or more other features, integers, steps, operations, elements, components, and/or groups thereof. It will be understood that when an element is referred to as being "connected" or "coupled" to another element, it may be directly connected or coupled to the other element or intervening elements may be present. Furthermore, "connected" or "coupled" as used herein may comprise wirelessly connected or coupled. As used herein, the term "and/or" includes any and all combinations of one or more of the associated listed items.

**Claims**

1. A method in a first network node (110), for configuring a second network node (120) to operate either in cell mode or in beam mode when communicating with at least one user equipment (130, 140), wherein control signalling and data transmissions are transmitted between the second network node (120) and the at least one user equipment (130, 140), when the second network node (120) is configured in cell mode, and wherein at least some control signalling is transmitted between the first network node (110) and the at least one user equipment (130, 140), while data transmissions are transmitted between the second network node (120) and the at least one user equipment (130, 140) when the second network node (120) is configured in beam mode, the method comprising:

*obtaining* (701) information for determining the operative mode of the second network node (120),
*comparing* (702) the obtained information with a threshold value,
*determining* (703) the operative mode of the second network node (120), based on the made comparison, and
*configuring* (704) the second network node (120) in cell mode or in beam mode when communicating with the at least one user equipment (130, 140), according to the determined operative mode of the second network node (120).

2. The method according to claim 1, wherein the information for determining the operative mode of the second network node (120) to be obtained comprises: the number of user equipment (130, 140) that momentarily attempt to access the second network node (120); the time; the received power of a signal or signals received from the first network node (110), and/or the second network node (120) respectively, as measured by the user equipment (130, 140); the Reference Signal Received Power, RSPR, measured by the user equipment (130, 140) on a signal or signals received from the first network node (110), and/or the second network node (120); the received quality of a signal or signals received from the first network node (110), and/or the second network node (120) respectively, as measured by the user equipment (130, 140); the received signal strength of sounding reference signals, SRS, emitted by the user equipment (130, 140) and measured by the first network node (110) and/or the second network node (120).

3. The method according to any of the claims 1-2, wherein:

configuring (704) the operative mode of the second network node (120) is performed in relation to each individual user equipment (130, 140) to be served by the second network node (120), such that the second network node (120) is configured to operate in cell mode when communicating with one or more first user equipment (130) and simultaneously operate in beam mode when communicating with one or more second user equipment (140).

4. The method according to any of the claims 1-3, wherein:

comparing (702) the obtained information for determining the operative mode of the second network node (120) with a threshold value comprises computing a ratio comprising the received power of a signal or signals received from the first network node (110), divided with the received power of a signal or signals received from the second network node (120), and comparing that ratio with the threshold value.

5. The method according to any of the claims 1-4, wherein:

determining (703) the operative mode of the second network node (120), is based on the made comparison with a threshold value, such that
if the obtained information for determining the operative mode of the second network node (120) comprises a value lower than the threshold value, the second network node (120) is determined to operate in cell mode when communicating with that at least one user equipment (130, 140),
if the obtained information for determining the operative mode of the second network node (120) comprises a value exceeding the threshold value, the second network node (120) is determined to operate in beam mode when communicating with that the at least one user equipment (130, 140).

6. The method according to any of the claims 1-5, wherein:

comparing (702) the obtained information with a threshold value comprises comparing the obtained information with a plurality of threshold values, and
determining (703) the operative mode of the second network node (120) based on the made comparison with a plurality of threshold values, such that
if the obtained information for determining the operative mode of the second network node (120) comprises a value lower than a first threshold value, the second network node (120) is determined to operate in cell mode when communicating with that at least one user equipment (130, 140),
if the obtained information for determining the operative mode of the second network node (120) comprises a value exceeding the first threshold value, but being lower than a second threshold value, the second network node (120) is determined to operate in beam mode when communicating with the at least one user equipment (130, 140), wherein control signalling is transmitted between first network node (110) and the at least one user equipment (130, 140), while all data transmissions are made between the second network node (120) and the at least one user equipment (130, 140), and

if the obtained information for determining the operative mode of the second network node (120) comprises a value exceeding the second threshold value, but being lower than a third threshold value, the second network node (120) is determined to operate in beam mode when communicating with the at least one user equipment (130, 140), wherein control signalling is transmitted between the first network node (110) and the at least one user equipment (130, 140), downlink data transmissions are transmitted from the first network node (110) to the at least one user equipment (130, 140) while uplink data transmissions from the at least one user equipment (130, 140) are made to the second network node (120).

7. The method according to any of the claims 1-6, wherein
obtaining (701) information for determining the operative mode of the second network node (120) comprises:

requesting information for determining the operative mode of the second network node (120) from the second network node (120), or the user equipment (130, 140), and
receiving the requested information from the second network node (120), or from the user equipment (130, 140), as a response to the request.

8. A first network node (110), adapted to configure a second network node (120) to operate either in cell mode or in beam mode when communicating with at least one user equipment (130, 140), wherein
control signalling and data transmissions are transmitted between the second network node (120) and the at least one user equipment (130, 140), when the second network node (120) is configured in cell mode, and wherein control signalling is transmitted between the first network node (110) and the at least one user equipment (130, 140), while data transmissions are transmitted between the second network node (120) and the at least one user equipment (130, 140) when the second network node (120) is configured in beam mode, the first network node (110) comprising:

a processing circuit (820), configured to obtain information for deciding the operative mode of the second network node (120), to compare the obtained information with a threshold value, to determine operative mode of the second network node (120), based on the made comparison, and to configure the second network node (120) in cell mode or in beam mode, when communicating with the at least one user equipment (130, 140), according to the determined operative mode of the second network node (120).

9. A method in a user equipment (130, 140), for configuring a second network node (120) to operate either in cell mode or in beam mode when communicating with at least one user equipment (130, 140), wherein
control signalling and data transmissions are transmitted between the second network node (120) and the at least one user equipment (130, 140), when the second network node (120) is configured in cell mode, and wherein at least some control signalling is transmitted between a first network node (110) and the at least one user equipment (130, 140), while data transmissions are transmitted between the second network node (120) and the at least one user equipment (130, 140) when the second network node (120) is configured in beam mode, the method comprising:

*obtaining* (901) information for determining the operative mode of the second network node (120),
*comparing* (902) the obtained information with a threshold value,
*determining* (903) the operative mode of the second network node (120), based on the made comparison, and
*configuring* (904) the second network node (120) in cell mode or in beam mode when communicating with the at least one user equipment (130, 140), according to the determined operative mode of the second network node (120).

10. The method according to claim 9, wherein the information for determining the operative mode of the second network node (120) to be obtained comprises: the number of user equipment (130, 140) that momentarily attempt to access the second network node (120); the time; the received power of a signal or signals received from the first network node (110), and/or the second network node (120) respectively, as measured by the user equipment (130, 140); the Reference Signal Received Power, RSPR, measured by the user equipment (130, 140) on a signal or signals received from the first network node (110), and/or the second network node (120); the received quality of a signal or signals received from the first network node (110), and/or the second network node (120) respectively, as measured by the user equipment (130, 140); the received signal strength of sounding reference signals, SRS, emitted by the user equipment (130, 140) and measured by the first network node (110) and/or the second network node (120).

11. The method according to any of the claims 9-10, wherein:

configuring (904) the operative mode of the second network node (120) is performed in relation to each individual user equipment (130, 140) to be served by the second network node (120), such that the second network node (120) is configured to operate in cell mode when communicating with one or more first user equipment (130) and simultaneously operate in beam mode when communicating with one or more second user equipment (140).

12. The method according to any of the claims 9-11, wherein:

comparing (902) the obtained information for determining the operative mode of the second network node (120) with a threshold value comprises computing a ratio comprising the received power of a signal or signals received from the first network node (110), divided with the received power of a signal or signals received from the second network node (120), and comparing that ratio with the threshold value.

13. The method according to any of the claims 9-12, wherein:

determining (903) the operative mode of the second network node (120), is based on the made comparison with a threshold value, such that
if the obtained information for determining the operative mode of the second network node (120) comprises a value lower than the threshold value, the second network node (120) is determined to operate in cell mode when communicating with that at least one user equipment (130, 140),
if the obtained information for determining the operative mode of the second network node (120) comprises a value exceeding the threshold value, the second network node (120) is determined to operate in beam mode when communicating with that the at least one user equipment (130, 140).

14. The method according to any of the claims 9-13, wherein
obtaining (901) information for determining the operative mode of the second network node (120) comprises:

requesting information for determining the operative mode of the second network node (120) from the first network node (110) or from the second network node (120), and
receiving the requested information from the first network node (110) or the second network node (120), as a response to the request.

15. A user equipment (130, 140), adapted to configure a second network node (120) to operate either in cell mode or in beam mode when communicating with at least one user equipment (130, 140), wherein
control signalling and data transmissions are transmitted between the second network node (120) and the at least one user equipment (130, 140), when the second network node (120) is configured in cell mode, and wherein
control signalling is transmitted between a first network node (110) and the at least one user equipment (130, 140), while data transmissions are transmitted between the second network node (120) and the at least one user equipment (130, 140) when the second network node (120) is configured in beam mode, the user equipment (130, 140) comprising:

a processing circuit (1020), configured to obtain information for deciding the operative mode of the second network node (120), to compare the obtained information with a threshold value, to determine operative mode of the second network node (120), based on the made comparison, and to configure the second network node (120) in cell mode or in beam mode, when communicating with the at least one user equipment (130, 140), according to the determined operative mode of the second network node (120).

**Patentansprüche**

1. Verfahren in einem ersten Netzknoten (110) zum Konfigurieren eines zweiten Netzknotens (120), um entweder im Zellmodus oder im Strahlmodus zu funktionieren, wenn er mit mindestens einem Benutzergerät (130, 140) kommuniziert, worin
Steuersignalisierung und Datenübertragungen zwischen dem zweiten Netzknoten (120) und dem mindestens einen Benutzergerät (130, 140) übertragen werden, wenn der zweite Netzknoten (120) im Zellmodus konfiguriert ist, und worin

mindestens einige Steuersignalisierung zwischen dem ersten Netzknoten (110) und dem mindestens einen Benutzergerät (130, 140) übertragen wird, während Datenübertragungen zwischen dem zweiten Netzknoten (120) und dem mindestens einen Benutzergerät (130, 140) übertragen werden, wenn der zweite Netzknoten (120) im Strahlmodus konfiguriert ist, wobei das Verfahren Folgendes umfasst:

Ermitteln (701) von Information zum Bestimmen des Betriebsmodus des zweiten Netzknotens (120),
Vergleichen (702) der ermittelten Information mit einem Schwellenwert,
Bestimmen (703) des Betriebsmodus des zweiten Netzknotens (120) auf der Basis des ausgeführten Vergleichs, und
Konfigurieren (704) des zweiten Netzknotens (120) im Zellmodus oder im Strahlmodus gemäß dem bestimmten Betriebsmodus des zweiten Netzknotens (120), wenn er mit dem mindestens einen Benutzergerät (130, 140) kommuniziert.

2. Verfahren nach Anspruch 1, worin die zu ermittelnde Information zum Bestimmen des Betriebsmodus des zweiten Netzknotens (120) Folgendes umfasst: die Anzahl von Benutzergeräten (130, 140), die für einen Augenblick versuchen, auf den zweiten Netzknoten (120) zuzugreifen; die Zeit; die empfangene Leistung von einem oder mehreren von dem ersten Netzknoten (110) und/oder dem zweiten Netzknoten (120) jeweils empfangenen Signalen, wie sie vom Benutzergerät (130, 140) gemessen wird; die Referenzsignal-Empfangsleistung, RSPR, vom Benutzergerät (130, 140) an einem Signal oder mehreren Signalen gemessen, die vom ersten Netzknoten (110) und/oder dem zweiten Netzknoten (120) empfangen werden; die empfangene Qualität eines Signals oder mehrerer Signale, die von dem ersten Netzknoten (110) und/oder dem zweiten Netzknoten (120) jeweils empfangen werden, wie sie vom Benutzergerät (130, 140) gemessen wird; die empfangene Signalstärke der vom Benutzergerät (130, 140) emittierten sondierenden Referenzsignale, SRS, die von dem ersten Netzknoten (110) und/oder dem zweiten Netzknoten (120) gemessen wird.

3. Verfahren nach einem der Ansprüche 1-2, worin:

das Konfigurieren (704) des Betriebsmodus des zweiten Netzknotens (120) in Bezug auf jedes einzelne Benutzergerät (130, 140) ausgeführt wird, das vom zweiten Netzknoten (120) zu versorgen ist, sodass der zweite Netzknoten (120) dazu konfiguriert ist, im Zellmodus zu funktionieren, wenn er mit einem oder mehreren ersten Benutzergeräten (130) kommuniziert, und gleichzeitig im Strahlmodus zu funktionieren, wenn er mit einem oder mehreren zweiten Benutzergeräten (140) kommuniziert.

4. Verfahren nach einem der Ansprüche 1-3, worin:

das Vergleichen (702) der ermittelten Information zum Bestimmen des Betriebsmodus des zweiten Netzknotens (120) mit einem Schwellenwert umfasst, dass ein Verhältnis berechnet wird, das die empfangene Leistung eines Signals oder mehrerer Signale umfasst, die vom ersten Netzknoten (110) empfangen werden, dividiert durch die empfangene Leistung eines Signals oder mehrerer Signale, die vom zweiten Netzknoten (120) empfangen werden, und dieses Verhältnis mit dem Schwellenwert verglichen wird.

5. Verfahren nach einem der Ansprüche 1-4, worin:

das Bestimmen (703) des Betriebsmodus des zweiten Netzknotens (120) auf dem ausgeführten Vergleich mit einem Schwellenwert basiert, sodass,
falls die ermittelte Information zum Bestimmen des Betriebsmodus des zweiten Netzknotens (120) einen Wert umfasst, der niedriger ist als der Schwellenwert, der zweite Netzknoten (120) dazu bestimmt ist, im Zellmodus zu funktionieren, wenn er mit diesem mindestens einen Benutzergerät (130, 140) kommuniziert,
falls die ermittelte Information zum Bestimmen des Betriebsmodus des zweiten Netzknotens (120) einen Wert umfasst, der den Schwellenwert übersteigt, der zweite Netzknoten (120) dazu bestimmt ist, im Strahlmodus zu funktionieren, wenn er mit diesem mindestens einen Benutzergerät (130, 140) kommuniziert.

6. Verfahren nach einem der Ansprüche 1-5, worin:

Vergleichen (702) der ermittelten Information mit einem Schwellenwert umfasst, dass die ermittelte Information mit einer Vielzahl von Schwellenwerten verglichen wird, und

Bestimmen (703) des Betriebsmodus des zweiten Netzknotens (120) auf dem ausgeführten Vergleich mit einer Vielzahl von Schwellenwerten basiert, sodass

falls die ermittelte Information zum Bestimmen des Betriebsmodus des zweiten Netzknotens (120) einen Wert umfasst, der niedriger ist als ein erster Schwellenwert, der zweite Netzknoten (120) dazu bestimmt ist, im Zellmodus zu funktionieren, wenn er mit diesem mindestens einen Benutzergerät (130, 140) kommuniziert, falls die ermittelte Information zum Bestimmen des Betriebsmodus des zweiten Netzknotens (120) einen Wert umfasst, der den ersten Schwellenwert übersteigt, aber kleiner ist als ein zweiter Schwellenwert, der zweite Netzknoten (120) dazu bestimmt ist, im Strahlmodus zu funktionieren, wenn er mit dem mindestens einen Benutzergerät (130, 140) kommuniziert, worin Steuersignalisierung zwischen dem ersten Netzknoten (110) und dem mindestens einen Benutzergerät (130, 140) übertragen wird, während alle Datenübertragungen zwischen dem zweiten Netzknoten (120) und dem mindestens einen Benutzergerät (130, 140) ausgeführt werden, und falls die ermittelte Information zum Bestimmen des Betriebsmodus des zweiten Netzknotens (120) einen Wert umfasst, der den zweiten Schwellenwert übersteigt, aber kleiner ist als ein dritter Schwellenwert, der zweite Netzknoten (120) dazu bestimmt ist, im Strahlmodus zu funktionieren, wenn er mit dem mindestens einen Benutzergerät (130, 140) kommuniziert, worin Steuersignalisierung zwischen dem ersten Netzknoten (110) und dem mindestens einen Benutzergerät (130, 140) übertragen wird, Downlink-Datenübertragungen vom ersten Netzknoten (110) an das mindestens eine Benutzergerät (130, 140) übertragen werden, während Uplink-Datenübertragungen vom dem mindestens einen Benutzergerät (130, 140) an den zweiten Netzknoten (120) ausgeführt werden.

7. Verfahren nach einem der Ansprüche 1-6, worin:

das Ermitteln (701) von Information zum Bestimmen des Betriebsmodus des zweiten Netzknotens (120) Folgendes umfasst:

Anfordern von Information zum Bestimmen des Betriebsmodus des zweiten Netzknotens (120) vom zweiten Netzknoten (120) oder dem Benutzergerät (130, 140), und
Empfangen der angeforderten Information vom zweiten Netzknoten (120) oder vom Benutzergerät (130, 140) als eine Antwort auf die Anforderung.

8. Erster Netzknoten (110), angepasst zum Konfigurieren eines zweiten Netzknotens (120), um entweder im Zellmodus oder im Strahlmodus zu funktionieren, wenn er mit mindestens einem Benutzergerät (130, 140) kommuniziert, worin Steuersignalisierung und Datenübertragungen zwischen dem zweiten Netzknoten (120) und dem mindestens einen Benutzergerät (130, 140) übertragen werden, wenn der zweite Netzknoten (120) im Zellmodus konfiguriert ist, und worin
Steuersignalisierung zwischen dem ersten Netzknoten (110) und dem mindestens einen Benutzergerät (130, 140) übertragen wird, während Datenübertragungen zwischen dem zweiten Netzknoten (120) und dem mindestens einen Benutzergerät (130, 140) übertragen werden, wenn der zweite Netzknoten (120) im Strahlmodus konfiguriert ist, wobei der erste Netzknoten (110) Folgendes umfasst:

eine Verarbeitungsschaltung (820), konfiguriert zum Ermitteln von Information, um über den Betriebsmodus des zweiten Netzknotens (120) zu entscheiden, die ermittelte Information mit einem Schwellenwert zu vergleichen, den Betriebsmodus des zweiten Netzknotens (120) auf der Basis des ausgeführten Vergleichs zu bestimmen und den zweiten Netzknoten (120) im Zellmodus oder im Strahlmodus gemäß dem bestimmten Betriebsmodus des zweiten Netzknotens (120) zu konfigurieren, wenn er mit dem mindestens einen Benutzergerät (130, 140) kommuniziert.

9. Verfahren in einem Benutzergerät (130, 140) zum Konfigurieren eines zweiten Netzknotens (120), um entweder im Zellmodus oder im Strahlmodus zu funktionieren, wenn er mit mindestens einem Benutzergerät (130, 140) kommuniziert, worin Steuersignalisierung und Datenübertragungen zwischen dem zweiten Netzknoten (120) und dem mindestens einen Benutzergerät (130, 140) übertragen werden, wenn der zweite Netzknoten (120) im Zellmodus konfiguriert ist, und worin
mindestens einige Steuersignalisierung zwischen einem ersten Netzknoten (110) und dem mindestens einen Benutzergerät (130, 140) übertragen wird, während Datenübertragungen zwischen dem zweiten Netzknoten (120) und dem mindestens einen Benutzergerät (130, 140) übertragen werden, wenn der zweite Netzknoten (120) im Strahlmodus konfiguriert ist, wobei das Verfahren Folgendes umfasst:

Ermitteln (901) von Information zum Bestimmen des Betriebsmodus des zweiten Netzknotens (120),
Vergleichen (902) der ermittelten Information mit einem Schwellenwert,
Bestimmen (903) des Betriebsmodus des zweiten Netzknotens (120) auf der Basis des ausgeführten Vergleichs, und
Konfigurieren (904) des zweiten Netzknotens (120) im Zellmodus oder im Strahlmodus gemäß dem bestimmten Betriebsmodus des zweiten Netzknotens (120), wenn er mit dem mindestens einen Benutzergerät (130, 140) kommuniziert.

10. Verfahren nach Anspruch 9, worin die zu ermittelnde Information zum Bestimmen des Betriebsmodus des zweiten Netzknotens (120) Folgendes umfasst: die Anzahl von Benutzergeräten (130, 140), die für einen Augenblick versuchen, auf den zweiten Netzknoten (120) zuzugreifen; die Zeit; die empfangene Leistung von einem oder mehreren von dem ersten Netzknoten (110) und/oder dem zweiten Netzknoten (120) jeweils empfangenen Signalen, wie sie vom Benutzergerät (130, 140) gemessen wird; die Referenzsignal-Empfangsleistung, RSPR, vom Benutzergerät (130, 140) an einem Signal oder mehreren Signalen gemessen, die vom ersten Netzknoten (110) und/oder dem zweiten Netzknoten (120) empfangen werden; die empfangene Qualität eines Signals oder mehrerer Signale, die von dem ersten Netzknoten (110) und/oder dem zweiten Netzknoten (120) jeweils empfangen werden, wie sie vom Benutzergerät (130, 140) gemessen wird; die empfangene Signalstärke der vom Benutzergerät (130, 140) emittierten sondierenden Referenzsignale, SRS, die von dem ersten Netzknoten (110) und/oder dem zweiten Netzknoten (120) gemessen wird.

11. Verfahren nach einem der Ansprüche 9-10, worin:

das Konfigurieren (904) des Betriebsmodus des zweiten Netzknotens (120) in Bezug auf jedes einzelne Benutzergerät (130, 140) ausgeführt wird, das vom zweiten Netzknoten (120) zu versorgen ist, sodass der zweite Netzknoten (120) dazu konfiguriert ist, im Zellmodus zu funktionieren, wenn er mit einem oder mehreren ersten Benutzergeräten (130) kommuniziert, und gleichzeitig im Strahlmodus zu funktionieren, wenn er mit einem oder mehreren zweiten Benutzergeräten (140) kommuniziert.

12. Verfahren nach einem der Ansprüche 9-11, worin:

das Vergleichen (902) der ermittelten Information zum Bestimmen des Betriebsmodus des zweiten Netzknotens (120) mit einem Schwellenwert umfasst, dass ein Verhältnis berechnet wird, das die empfangene Leistung eines Signals oder mehrerer Signale umfasst, die vom ersten Netzknoten (110) empfangen werden, dividiert durch die empfangene Leistung eines Signals oder mehrerer Signale, die vom zweiten Netzknoten (120) empfangen werden, und Vergleichen dieses Verhältnisses mit dem Schwellenwert.

13. Verfahren nach einem der Ansprüche 9-12, worin:

das Bestimmen (903) des Betriebsmodus des zweiten Netzknotens (120) auf dem ausgeführten Vergleich mit einem Schwellenwert basiert, sodass,
falls die ermittelte Information zum Bestimmen des Betriebsmodus des zweiten Netzknotens (120) einen Wert umfasst, der niedriger ist als der Schwellenwert, der zweite Netzknoten (120) dazu bestimmt ist, im Zellmodus zu funktionieren, wenn er mit diesem mindestens einen Benutzergerät (130, 140) kommuniziert,
falls die ermittelte Information zum Bestimmen des Betriebsmodus des zweiten Netzknotens (120) einen Wert umfasst, der den Schwellenwert übersteigt, der zweite Netzknoten (120) dazu bestimmt ist, im Strahlmodus zu funktionieren, wenn er mit diesem mindestens einen Benutzergerät (130, 140) kommuniziert.

14. Verfahren nach einem der Ansprüche 9-13, worin:

das Ermitteln (901) von Information zum Bestimmen des Betriebsmodus des zweiten Netzknotens (120) Folgendes umfasst:

Anfordern von Information zum Bestimmen des Betriebsmodus des zweiten Netzknotens (120) vom ersten Netzknoten (110) oder vom zweiten Netzknoten (120), und
Empfangen der angeforderten Information vom ersten Netzknoten (110) oder vom zweiten Netzknoten (120) als eine Antwort auf die Anforderung.

15. Benutzergerät (130, 140), angepasst zum Konfigurieren eines zweiten Netzknotens (120), um entweder im Zellmodus oder im Strahlmodus zu funktionieren, wenn er mit mindestens einem Benutzergerät (130, 140) kommuniziert, worin

Steuersignalisierung und Datenübertragungen zwischen dem zweiten Netzknoten (120) und dem mindestens einen Benutzergerät (130, 140) übertragen werden, wenn der zweite Netzknoten (120) im Zellmodus konfiguriert ist, und worin

Steuersignalisierung zwischen dem ersten Netzknoten (110) und dem mindestens einen Benutzergerät (130, 140) übertragen wird, während Datenübertragungen zwischen dem zweiten Netzknoten (120) und dem mindestens einen Benutzergerät (130, 140) übertragen werden, wenn der zweite Netzknoten (120) im Strahlmodus konfiguriert ist, wobei das Benutzergerät (130, 140) Folgendes umfasst:

eine Verarbeitungsschaltung (1020), konfiguriert zum Ermitteln von Information, um über den Betriebsmodus des zweiten Netzknotens (120) zu entscheiden, die ermittelte Information mit einem Schwellenwert zu vergleichen, den Betriebsmodus des zweiten Netzknotens (120) auf der Basis des ausgeführten Vergleichs zu bestimmen und den zweiten Netzknoten (120) im Zellmodus oder im Strahlmodus gemäß dem bestimmten Betriebsmodus des zweiten Netzknotens (120) zu konfigurieren, wenn er mit dem mindestens einen Benutzergerät (130, 140) kommuniziert.

## Revendications

1. Procédé, mis en oeuvre dans un premier noeud de réseau (110), de configuration d'un second noeud de réseau (120) afin qu'il fonctionne soit dans un mode « cellule », soit dans un mode « faisceau », lors de communications avec au moins un équipement d'utilisateur (130, 140), dans lequel

une signalisation de commande et des transmissions de données sont transmises entre le second noeud de réseau (120) et ledit au moins un équipement d'utilisateur (130, 140), lorsque le second noeud de réseau (120) est configuré en mode « cellule », et dans lequel

au moins une certaine signalisation de commande est transmise entre le premier noeud de réseau (110) et ledit au moins un équipement d'utilisateur (130, 140), tandis que des transmissions de données sont transmises entre le second noeud de réseau (120) et ledit au moins un équipement d'utilisateur (130, 140) lorsque le second noeud de réseau (120) est configuré en mode « faisceau », le procédé comprenant les étapes ci-dessous consistant à :

*obtenir* (701) des informations en vue de déterminer le mode de fonctionnement du second noeud de réseau (120) ;
*comparer* (702) les informations obtenues à une valeur de seuil ;
*déterminer* (703) le mode de fonctionnement du second noeud de réseau (120), sur la base de la comparaison effectuée ; et
*configurer* (704) le second noeud de réseau (120) en mode « cellule » ou en mode « faisceau » lors de communications avec ledit au moins un équipement d'utilisateur (130, 140), selon le mode de fonctionnement déterminé du second noeud de réseau (120).

2. Procédé selon la revendication 1, dans lequel les informations destinées à déterminer le mode de fonctionnement du second noeud de réseau (120) à obtenir comportent : le nombre d'équipements d'utilisateur (130, 140) qui tentent momentanément d'accéder au second noeud de réseau (120) ; l'heure ; la puissance reçue d'un signal ou de signaux reçus à partir du premier noeud de réseau (110), et/ou du second noeud de réseau (120), respectivement, telle que mesurée par l'équipement d'utilisateur (130, 140) ; la puissance reçue de signal de référence, RSPR, mesurée par l'équipement d'utilisateur (130, 140) sur un signal ou des signaux reçus à partir du premier noeud de réseau (110), et/ou du second noeud de réseau (120) ; la qualité reçue d'un signal ou de signaux reçus à partir du premier noeud de réseau (110), et/ou du second noeud de réseau (120), respectivement, telle que mesurée par l'équipement d'utilisateur (130, 140) ; la puissance de signal reçue de signaux de référence de sondage, SRS, émise par l'équipement d'utilisateur (130, 140) et mesurée par le premier noeud de réseau (110) et/ou le second noeud de réseau (120).

3. Procédé selon l'une quelconque des revendications 1 à 2, dans lequel :

la configuration (704) du mode de fonctionnement du second noeud de réseau (120) est mise en oeuvre relativement à chaque équipement d'utilisateur individuel (130, 140) devant être desservi par le second noeud de réseau (120), de sorte que le second noeud de réseau (120) est configuré de manière à fonctionner en mode « cellule » lors de communications avec un ou plusieurs premiers équipements d'utilisateur (130) et simultanément à fonctionner en mode « faisceau » lors de communications avec un ou plusieurs seconds équipements d'utilisateur (140).

4. Procédé selon l'une quelconque des revendications 1 à 3, dans lequel :

l'étape consistant à comparer (702) les informations obtenues en vue de déterminer le mode de fonctionnement du second noeud de réseau (120) à une valeur de seuil consiste à calculer un rapport comprenant la puissance reçue d'un signal ou de signaux reçus à partir du premier noeud de réseau (110), divisée par la puissance reçue d'un signal ou de signaux reçus à partir du second noeud de réseau (120), et à comparer ce rapport à la valeur de seuil.

5. Procédé selon l'une quelconque des revendications 1 à 4, dans lequel :

l'étape consistant à déterminer (703) le mode de fonctionnement du second noeud de réseau (120) est basée sur la comparaison effectuée à une valeur de seuil, de sorte que
si les informations obtenues destinées à déterminer le mode de fonctionnement du second noeud de réseau (120) comportent une valeur inférieure à la valeur de seuil, le second noeud de réseau (120) est déterminé comme fonctionnant en mode « cellule » lors de communications avec ledit au moins un équipement d'utilisateur (130, 140) ;
si les informations obtenues destinées à déterminer le mode de fonctionnement du second noeud de réseau (120) comportent une valeur supérieure à la valeur de seuil, le second noeud de réseau (120) est déterminé comme fonctionnant en mode « faisceau » lors de communications avec ledit au moins un équipement d'utilisateur (130, 140).

6. Procédé selon l'une quelconque des revendications 1 à 5, dans lequel :

l'étape consistant à comparer (702) les informations obtenues à une valeur de seuil consiste à comparer les informations obtenues à une pluralité de valeurs de seuil ; et
l'étape consistant à déterminer (703) le mode de fonctionnement du second noeud de réseau (120) est basée sur la comparaison effectuée à une pluralité de valeurs de seuil, de sorte que
si les informations obtenues destinées à déterminer le mode de fonctionnement du second noeud de réseau (120) comportent une valeur inférieure à une première valeur de seuil, le second noeud de réseau (120) est déterminé comme fonctionnant en mode « cellule » lors de communications avec ledit au moins un équipement d'utilisateur (130, 140) ;
si les informations obtenues destinées à déterminer le mode de fonctionnement du second noeud de réseau (120) comportent une valeur supérieure à la première valeur de seuil, mais inférieure à une deuxième valeur de seuil, le second noeud de réseau (120) est déterminé comme fonctionnant en mode « faisceau » lors de communications avec ledit au moins un équipement d'utilisateur (130, 140), dans lequel une signalisation de commande est transmise entre le premier noeud de réseau (110) et ledit au moins un équipement d'utilisateur (130, 140), tandis que toutes les transmissions de données sont effectuées entre le second noeud de réseau (120) et ledit au moins un équipement d'utilisateur (130, 140) ; et
si les informations obtenues destinées à déterminer le mode de fonctionnement du second noeud de réseau (120) comportent une valeur supérieure à la deuxième valeur de seuil, mais inférieure à une troisième valeur de seuil, le second noeud de réseau (120) est déterminé comme fonctionnant en mode « faisceau » lors de communications avec ledit au moins un équipement d'utilisateur (130, 140), dans lequel une signalisation de commande est transmise entre le premier noeud de réseau (110) et ledit au moins un équipement d'utilisateur (130, 140), des transmissions de données en liaison descendante sont transmises du premier noeud de réseau (110) audit au moins un équipement d'utilisateur (130, 140), tandis que des transmissions de données en liaison montante à partir dudit au moins un équipement d'utilisateur (130, 140) sont effectuées vers le second noeud de réseau (120).

7. Procédé selon l'une quelconque des revendications 1 à 6, dans lequel
l'étape consistant à obtenir (701) des informations destinées à déterminer le mode de fonctionnement du second noeud de réseau (120) comprend les étapes ci-dessous consistant à :

demander des informations pour déterminer le mode de fonctionnement du second noeud de réseau (120) auprès du second noeud de réseau (120), ou de l'équipement d'utilisateur (130, 140) ; et
recevoir les informations demandées auprès du second noeud de réseau (120), ou de l'équipement d'utilisateur (130, 140), en réponse à la demande.

**8.** Premier noeud de réseau (110), apte à configurer un second noeud de réseau (120) afin qu'il fonctionne soit dans un mode « cellule », soit dans un mode « faisceau », lors de communications avec au moins un équipement d'utilisateur (130, 140), dans lequel
une signalisation de commande et des transmissions de données sont transmises entre le second noeud de réseau (120) et ledit au moins un équipement d'utilisateur (130, 140), lorsque le second noeud de réseau (120) est configuré en mode « cellule », et dans lequel
une signalisation de commande est transmise entre le premier noeud de réseau (110) et ledit au moins un équipement d'utilisateur (130, 140), tandis que des transmissions de données sont transmises entre le second noeud de réseau (120) et ledit au moins un équipement d'utilisateur (130, 140), lorsque le second noeud de réseau (120) est configuré en mode « faisceau », le premier noeud de réseau (110) comprenant :

un circuit de traitement (820), configuré de manière à obtenir des informations destinées à déterminer le mode de fonctionnement du second noeud de réseau (120), à comparer les informations obtenues à une valeur de seuil, à déterminer un mode de fonctionnement du second noeud de réseau (120), sur la base de la comparaison effectuée, et à configurer le second noeud de réseau (120) en mode « cellule » ou en mode « faisceau », lors de communications avec ledit au moins un équipement d'utilisateur (130, 140), selon le mode de fonctionnement déterminé du second noeud de réseau (120).

**9.** Procédé, mis en oeuvre dans un équipement d'utilisateur (130, 140), de configuration d'un second noeud de réseau (120) afin qu'il fonctionne soit dans un mode « cellule », soit dans un mode « faisceau », lors de communications avec au moins un équipement d'utilisateur (130, 140), dans lequel
une signalisation de commande et des transmissions de données sont transmises entre le second noeud de réseau (120) et ledit au moins un équipement d'utilisateur (130, 140), lorsque le second noeud de réseau (120) est configuré en mode « cellule », et dans lequel
au moins une certaine signalisation de commande est transmise entre un premier noeud de réseau (110) et ledit au moins un équipement d'utilisateur (130, 140), tandis que des transmissions de données sont transmises entre le second noeud de réseau (120) et ledit au moins un équipement d'utilisateur (130, 140) lorsque le second noeud de réseau (120) est configuré en mode « faisceau », le procédé comprenant les étapes ci-dessous consistant à :

*obtenir* (901) des informations en vue de déterminer le mode de fonctionnement du second noeud de réseau (120) ;
*comparer* (902) les informations obtenues à une valeur de seuil ;
*déterminer* (903) le mode de fonctionnement du second noeud de réseau (120), sur la base de la comparaison effectuée ; et
*configurer* (904) le second noeud de réseau (120) en mode « cellule » ou en mode « faisceau » lors de communications avec ledit au moins un équipement d'utilisateur (130, 140), selon le mode de fonctionnement déterminé du second noeud de réseau (120).

**10.** Procédé selon la revendication 9, dans lequel les informations destinées à déterminer le mode de fonctionnement du second noeud de réseau (120) à obtenir comportent : le nombre d'équipements d'utilisateur (130, 140) qui tentent momentanément d'accéder au second noeud de réseau (120) ; l'heure ; la puissance reçue d'un signal ou de signaux reçus à partir du premier noeud de réseau (110), et/ou du second noeud de réseau (120), respectivement, telle que mesurée par l'équipement d'utilisateur (130, 140) ; la puissance reçue de signal de référence, RSPR, mesurée par l'équipement d'utilisateur (130, 140) sur un signal ou des signaux reçus à partir du premier noeud de réseau (110), et/ou du second noeud de réseau (120) ; la qualité reçue d'un signal ou de signaux reçus à partir du premier noeud de réseau (110), et/ou du second noeud de réseau (120), respectivement, telle que mesurée par l'équipement d'utilisateur (130, 140) ; la puissance de signal reçue de signaux de référence de sondage, SRS, émise par l'équipement d'utilisateur (130, 140) et mesurée par le premier noeud de réseau (110) et/ou le second noeud de réseau (120).

**11.** Procédé selon l'une quelconque des revendications 9 à 10, dans lequel :

la configuration (904) du mode de fonctionnement du second noeud de réseau (120) est mise en oeuvre relativement à chaque équipement d'utilisateur individuel (130, 140) devant être desservi par le second noeud de réseau (120), de sorte que le second noeud de réseau (120) est configuré de manière à fonctionner en mode « cellule » lors de communications avec un ou plusieurs premiers équipements d'utilisateur (130) et simultanément à fonctionner en mode « faisceau » lors de communications avec un ou plusieurs seconds équipements d'utilisateur (140).

**12.** Procédé selon l'une quelconque des revendications 9 à 11, dans lequel :

l'étape consistant à comparer (902) les informations obtenues en vue de déterminer le mode de fonctionnement du second noeud de réseau (120) à une valeur de seuil consiste à calculer un rapport comprenant la puissance reçue d'un signal ou de signaux reçus à partir du premier noeud de réseau (110), divisée par la puissance reçue d'un signal ou de signaux reçus à partir du second noeud de réseau (120), et à comparer ce rapport à la valeur de seuil.

**13.** Procédé selon l'une quelconque des revendications 9 à 12, dans lequel :

l'étape consistant à déterminer (903) le mode de fonctionnement du second noeud de réseau (120) est basée sur la comparaison effectuée à une valeur de seuil, de sorte que
si les informations obtenues destinées à déterminer le mode de fonctionnement du second noeud de réseau (120) comportent une valeur inférieure à la valeur de seuil, le second noeud de réseau (120) est déterminé comme fonctionnant en mode « cellule » lors de communications avec ledit au moins un équipement d'utilisateur (130, 140) ;
si les informations obtenues destinées à déterminer le mode de fonctionnement du second noeud de réseau (120) comportent une valeur supérieure à la valeur de seuil, le second noeud de réseau (120) est déterminé comme fonctionnant en mode « faisceau » lors de communications avec ledit au moins un équipement d'utilisateur (130, 140).

**14.** Procédé selon l'une quelconque des revendications 9 à 13, dans lequel
l'étape consistant à obtenir (901) des informations destinées à déterminer le mode de fonctionnement du second noeud de réseau (120) comprend les étapes ci-dessous consistant à :

demander des informations pour déterminer le mode de fonctionnement du second noeud de réseau (120) auprès du premier noeud de réseau (110), ou du second noeud de réseau (120) ; et
recevoir les informations demandées auprès du premier noeud de réseau (110) ou du second noeud de réseau (120), en réponse à la demande.

**15.** Équipement d'utilisateur (130, 140), apte à configurer un second noeud de réseau (120) afin qu'il fonctionne soit dans un mode « cellule », soit dans un mode « faisceau », lors de communications avec au moins un équipement d'utilisateur (130, 140), dans lequel
une signalisation de commande et des transmissions de données sont transmises entre le second noeud de réseau (120) et ledit au moins un équipement d'utilisateur (130, 140), lorsque le second noeud de réseau (120) est configuré en mode « cellule », et dans lequel
une signalisation de commande est transmise entre le premier noeud de réseau (110) et ledit au moins un équipement d'utilisateur (130, 140), tandis que des transmissions de données sont transmises entre le second noeud de réseau (120) et ledit au moins un équipement d'utilisateur (130, 140), lorsque le second noeud de réseau (120) est configuré en mode « faisceau », l'équipement d'utilisateur (130, 140) comprenant :

un circuit de traitement (1020), configuré de manière à obtenir des informations destinées à déterminer le mode de fonctionnement du second noeud de réseau (120), à comparer les informations obtenues à une valeur de seuil, à déterminer un mode de fonctionnement du second noeud de réseau (120), sur la base de la comparaison effectuée, et à configurer le second noeud de réseau (120) en mode « cellule » ou en mode « faisceau », lors de communications avec ledit au moins un équipement d'utilisateur (130, 140), selon le mode de fonctionnement déterminé du second noeud de réseau (120).

Fig. 1 (PRIOR ART)

wireless communication network 100

Fig. 2

Fig. 3A

PSSm / SSSm, CRSm, BCHm                    PDCCH

PDSCH

First network
node 110

Pico beam
(part of first network node)

Fig. 3B

UE 140  UE 130
Second network
node 120

First network
node 110

Fig. 4

"Pico beam"                    Traditional beamforming

Fig. 5

```
    110                  130                    120
  Network              UE                    Network
  node 1                                     node 2
```

Signal ——————→ ←—————— Signal

Measure received signal
power (P1, P2) of each
received signal.

Send (P1, P2)

Compute
f(P1, P2).

Compute
f(P1, P2).

f(P1, P2) < T1?

f(P1, P2) < T1?

Determine cell
mode or beam
mode.

Determine cell
mode or beam
mode.

Mode information ——————→

Fig. 6A

**110**
Network
node 1

**130**
UE

**120**
Network
node 2

Measure
the time.

time < T1?

Determine
cell mode or
beam mode.

Mode information

Fig. 6B

Fig. 6C

Fig. 7

Fig. 8

START

Obtain information for deciding operative mode of the second network node.
901

Compare obtained information with threshold.
902

Determine if the second network node is to be configured in cell mode or in beam mode, based on the comparison.
903

Configure the second network node.
904

END

Fig. 9

Fig. 10